# EUROPEAN PATENT APPLICATION

(11) **EP 4 797 824 A1**
(43) Date of publication of application: **26.08.2026**
(21) Application number: 24890561.4
(22) Date of filing: 07.11.2024
(51) Int. Cl.: H04W 68/02

(54) **PAGING METHOD AND APPARATUS**

(30) Priority: 17.11.2023 CN 202311549447
(71) Applicant: HUAWEI TECHNOLOGIES CO., LTD., Shenzhen, Guangdong 518129 (CN)
(72) Inventor: XU, Shengfeng, Shenzhen, Guangdong 518129 (CN)
(74) Representative: Gill Jennings & Every LLP
(86) International application number: PCT/CN2024/130529
(87) International publication number: WO 2025/103204

(57) **Abstract**

This application relates to the field of communications technologies, and provides a paging method and apparatus. The method includes: when an AMF network element receives a first message from an SMF network element, the first message includes an identifier of a first session of a first terminal, and the AMF network element sends a first paging message to a first access network device corresponding to the first RAT type and associated with the first session. In this way, paging of the first terminal is implemented, and a communication connection of the first session is further restored.

## Description

### Cross-reference to related applications

This application claims priority to Chinese Patent Application No. 202311549447.X, filed with the China National Intellectual Property Administration on November 17, 2023, and entitled "A Paging Method and Apparatus." The entire content of this application is incorporated herein by reference.

### Technical Field

This application relates to the field of communications technologies, and in particular, to a paging method and apparatus.

### Background Technology

With the development of communication technologies, future terminals, such as mobile phones, may be capable of dual connectivity. A terminal is equipped with one subscriber identity module (subscriber identity module, SIM) card. In dual connectivity mode, the terminal can simultaneously connect to two radio access networks (radio access network, RAN), maintaining radio resource control (radio resource control, RRC) connections with both RANs. The terminal can transmit the same or different data through the two RANs. When the terminal accesses the network through the two RANs, and the radio access technology (radio access technology, RAT) of the two RANs are different, if the terminal is in an idle state, how to page the terminal becomes an issue to be addressed.

### Summary of the Invention

This application provides a paging method and apparatus, to achieve paging of a terminal.

According to a first aspect, a paging method is provided, where the method is applied to an access and mobility management function network element, and the method may be performed by the access and mobility management network element, or a module (for example, a chip or a circuit) in the access and mobility management network element, comprising: receiving a first message from a session management function network element, wherein the first message comprises an identifier of a first session of a first terminal, and the first session is associated with a first radio access technology type; and registering, by the first terminal, with the access and mobility management function network element through the access network device of the first radio access technology type and the access network device of the second radio access technology type; and; sending a first paging message to a first access network device corresponding to the first radio access technology type, wherein the first paging message comprises a first identifier of the first terminal. Optionally, the first access network device may be one or more access network devices. There is no limitation in this regard.

According to the foregoing method, when the first terminal accesses two access network devices in a dual third generation partnership project (3rd generation partnership project, 3GPP) access manner, and radio access technology types of the two access network devices are different, When the access and mobility management function network element receives a notification indicating that downlink data of a session arrives, the access and mobility management function network element may determine the radio access technology type based on the association relationship between the session and the radio access technology type. The access and mobility management function network element may page the first terminal through the access network device corresponding to the radio access technology type, so as to page the first terminal, and further restore the communication connection of the session.

In a possible design, the first access network device is located in a first registration area corresponding to the first radio access technology type.

In a possible design, the method further includes: receiving a first registration request from the first terminal, where the first registration request is received by an access network device of the first radio access technology type; and sending a first registration response to the first terminal, where the first registration response includes the first registration area corresponding to the first radio access technology type. Further, the method further includes: storing the association relationship between the first radio access technology type and the first registration area.

In a possible design, the method further includes: receiving a second registration request from the first terminal, where the second registration request is received by an access network device of the second radio access technology type; and sending a second registration response to the first terminal, where the second registration response includes the second registration area corresponding to the second radio access technology type. Further, the method further includes: storing the association relationship between the second radio access technology type and the second registration area.

Via the above method, when the first terminal adopts a dual 3GPP access mode, accesses two access network devices, and the radio access technology types of the two access network devices are different: when the access and mobility management function network element receives a notification that downlink data of a certain session has arrived, the access and mobility management function network element can determine a certain radio access technology type based on the association relationship between the session and the radio access technology type. Further, the access and mobility management function network element determines the registration area corresponding to the radio access technology type based on the maintained correspondence between different radio access technology types and the registration area. The access and mobility management function network element then pages the first terminal through the access network device corresponding to the registration area. In this way, paging of the first terminal is achieved, and the communication connection of the session is further restored. By allocating different registration areas to different radio access technology types, it is beneficial for the network to perform mobility management for the terminal using different radio access technology types, thereby improving the flexibility of mobility management.

In a possible design, the method further includes: determining a first identifier of the first terminal based on the first radio access technology type.

In a possible design, the method further includes: receiving a third registration request from the first terminal, where the third registration request is received through the access network device of the first radio access technology type; and; sending a third registration response to the first terminal, wherein the third registration response comprises a second identifier of the first terminal corresponding to the first radio access technology type, and the second identifier comprises the first identifier. Further, the method further includes: storing the association relationship between the second identifier and the first radio access technology type, or storing the association relationship between the first identifier and the first radio access technology type.

In a possible design, the method further includes: receiving a fourth registration request from the first terminal, where the fourth registration request is received through the access network device of the second radio access technology type; and; sending a fourth registration response to the first terminal, wherein the fourth registration response comprises a third identifier of the first terminal corresponding to the second radio access technology type, and the third identifier comprises a fourth identifier of the first terminal. Further, the method further includes: storing an association relationship between the third identifier and the second radio access technology type, or storing an association relationship between the fourth identifier and the second radio access technology type.

According to the foregoing method, because the identifier of the first terminal is associated with the radio access technology type, when the first terminal is paged, only the identifier of the first terminal corresponding to the radio access technology type needs to be carried in the paging message, without paging enhancement. For example, It is avoided that the paging message carries the indication information of the radio access technology type and the like, thereby reducing paging message overheads.

In a possible design, the connection status of the first terminal corresponding to the first radio access technology type is an idle state.

In a possible design, the method further includes: determining, based on an association relationship between a session and a radio access technology type, the first radio access technology type associated with the first session.

In a possible design, the first paging message further includes indication information of the first radio access technology type.

In a possible design, the first session is further associated with a second radio access technology type, and the method further includes: determining the first radio access technology type from the first radio access technology type and the second radio access technology type. Optionally, the first paging message further includes indication information of dual connectivity, and the dual connectivity includes a connection corresponding to the first radio access technology type and the second radio access technology type; or the first paging message further includes indication information of the first radio access technology type and the second radio access technology type. Optionally, the dual connectivity indication information is used to instruct the first terminal to restore or establish connections to the access network device of the first RAT type and the access network device of the second RAT type. For example, when the first terminal obtains the dual connectivity indication information from the paging message, the first terminal restores or establishes connections to the access network device of the first RAT type and the access network device of the second RAT type. The connection may be an RRC connection. Optionally, the dual connectivity indication information is used to instruct the first terminal to resume sessions established between the access network device of the first RAT type and the access network device of the second RAT type. For example, when the first terminal obtains the dual connectivity indication information from the paging message, the first terminal restores or establishes a connection to the access network device of the first RAT type and the access network device of the second RAT type. and request to resume sessions established on the access network device of the first RAT type and the access network device of the second RAT type.

According to the foregoing method, when a session is established through two access network devices of a radio access technology type, one radio access technology type may be selected from the two radio access technology types, and the first terminal is paged. For example, selecting a radio access technology type with good coverage or low latency helps improve paging efficiency. When receiving the paging message, the first terminal may restore the communication connections of the first session in the two radio access technology types based on information (for example, indication information of dual connectivity) carried in the paging message.

According to a second aspect, a peer-side method according to the first aspect is provided. For beneficial effects, refer to the description of the first aspect. A paging method is provided, where the method is applied to a first terminal, and the method is performed by the first terminal or a module (for example, a chip or a circuit) in the first terminal, and the method includes: receiving a second paging message, wherein the second paging message is received through a first access network device corresponding to a first radio access technology type, and the second paging message comprises a first identifier of the first terminal; and registering, by the first terminal, with an access and mobility management function network element through the access network device of the first radio access technology type and the access network device of the second radio access technology type; and; determining the first radio access technology type based on the second paging message or the first identifier; and; sending a second message to the access and mobility management function network element through a second access network device corresponding to the first radio access technology type, wherein the second message comprises the identifier of the first session associated with the first radio access technology type, and the second message is used to request to restore the communication connection of the first session.

In a possible design, the first access network device is in a first registration area corresponding to the first radio access technology type.

In a possible design, the method further includes: sending a first registration request to the access and mobility management function network element, where the first registration request is sent through the access network device of the first radio access technology type; and; receiving a first registration response from the access and mobility management function network element, wherein the first registration response comprises the first registration area corresponding to the first radio access technology type. Further, the method further includes: storing the association relationship between the first radio access technology type and the first registration area.

In a possible design, the method further includes: sending a second registration request to the access and mobility management function network element, where the second registration request is sent through the access network device of the second radio access technology type; and; receive a second registration response from the access and mobility management function network element, wherein the second registration response comprises a second registration area of the second radio access technology type. Further, the method further includes: storing the association relationship between the second radio access technology type and the second registration area.

In a possible design, the determining, based on the second paging message, the first radio access technology type further includes: determining the first radio access technology type based on the indication information of the first radio access technology type included in the second paging message; or determining the first radio access technology type based on a radio resource used to receive the second paging message.

In a possible design, the method further includes: sending a third registration request to the access and mobility management function network element, where the third registration request is sent by an access network device of the first radio access technology type; and receiving a third registration response from the access and mobility management function network element, where the third registration response includes a second identifier of a first terminal of the first radio access technology type, and the second identifier includes the first identifier. Further, the method further includes: storing an association relationship between the second identifier and the first radio access technology type, or storing an association relationship between the first identifier and the first radio access technology type.

In a possible design, the method further includes: sending a fourth registration request to the access and mobility management function network element, wherein the fourth registration request is sent by the access network device of the second radio access technology type; receiving a fourth registration response from the access and mobility management function network element, wherein the fourth registration response includes a third identifier of a first terminal of the second radio access technology type, and the third identifier includes a fourth identifier of the first terminal. Further, the method further includes: storing the association relationship between the third identifier and the second radio access technology type, or storing the association relationship between the fourth identifier and the second radio access technology type.

In a possible design, the method further includes: determining, based on the first radio access technology type, a first cell, wherein the first cell is a cell provided by the second access network device.

In a possible design, the first terminal is in an idle state in the connection state corresponding to the first radio access technology type.

As for the third aspect, it is a method corresponding to the opposite side of the first aspect. The beneficial effects can be referred to the description of the first aspect. The method provides a paging method, which is applied to a first terminal. The execution entity of the method is the first terminal, or a module (for example, a chip or a circuit) in the first terminal. The method includes: receiving a third paging message, wherein the third paging message is received by a first access network device corresponding to a first radio access technology type, the third paging message includes an identifier of a first session associated with the first radio access technology type and the second radio access technology type, and the first terminal registers with an access and mobility management function network element through an access network device of the first radio access technology type and an access network device of the second radio access technology type; determining, based on the third paging message, the first radio access technology type and the second radio access technology type; and sending, to the access and mobility management function network element through a third access network device corresponding to the first radio access technology type and a fourth access network device corresponding to the second radio access technology type, a third message, wherein the third message includes an identifier of a first session associated with the first radio access technology type and the second radio access technology type, and the third message is used to request to resume the communication connection of the first session.

In a possible design, the third paging message further includes indication information of dual connectivity, and the dual connectivity includes a connection corresponding to the first radio access technology type and the second radio access technology type; or the third paging message further includes indication information of the first radio access technology type and the second radio access technology type. Optionally, the dual connectivity indication information is used to instruct the first terminal to restore or establish connections to the access network device of the first RAT type and the access network device of the second RAT type. For example, when the first terminal obtains the dual connectivity indication information from the paging message, the first terminal restores or establishes a connection to the access network device of the first RAT type and the access network device of the second RAT type. The connection may be an RRC connection. Optionally, the dual connectivity indication information is used to instruct the first terminal to resume sessions established between the access network device of the first RAT type and the access network device of the second RAT type. For example, when the first terminal obtains the dual connectivity indication information from the paging message, the first terminal restores or establishes a connection to the access network device of the first RAT type and the access network device of the second RAT type. and requests to resume sessions established between the access network device of the first RAT type and the access network device of the second RAT type.

In a possible design, the method further includes: determining a second cell based on the first radio access technology type, where the second cell is a cell provided by a third access network device corresponding to the first radio access technology type; and; determining a third cell based on the second radio access technology type, wherein the third cell is a cell provided by a fourth access network device corresponding to the second radio access technology type.

In a possible design, the connection status corresponding to the first radio access technology type of the first terminal is an idle state.

According to a fourth aspect, a paging method is provided. The method is applied to an access and mobility management function network element. The method may be performed by the access and mobility management function network element or a module (for example, a chip or a circuit) in the access and mobility management function network element, and the method includes: receiving a fourth message from a session management function network element, wherein the fourth message comprises an identifier of a second session of a second terminal, and the second session is associated with a third radio access technology type; and registering, by the second terminal, with the access and mobility management function network element through the access network device of the third radio access technology type and the access network device of the fourth radio access technology type; and; sending a fourth paging message to a target access network device corresponding to a target radio access technology type, wherein the fourth paging message comprises an identifier of the second terminal, and the target radio access technology type is determined by the second terminal or the access and mobility management function network element; and the target radio access technology type is the third radio access technology type or the fourth radio access technology type.

According to the foregoing method, the access and mobility management function network element negotiates with the second terminal a radio access technology type used to page the second terminal, and the second terminal listens to the paging message in the negotiated radio access technology type, thereby reducing listening energy consumption of the terminal. "Listen" can be understood as receiving. For example, if the access and mobility management function network element negotiates with the second terminal to page the second terminal under the third radio access technology type, the access and mobility management function network element sends the fourth paging message to the access network device of the third radio access technology type. The access network device of the third radio access technology type sends the fifth paging message to the second terminal, and the second terminal listens to the paging message under the access network device of the third radio access technology type, and listens to the paging message only in a specific radio access technology type, thereby reducing listening energy consumption of the terminal.

In a possible design, the target access network device is in a registration area corresponding to the target radio access technology type.

In a possible design, the target radio access technology type is the third radio access technology type, and the method further includes: receiving a fifth registration request from the second terminal, wherein the fifth registration request is received by an access network device of the third radio access technology type; and sending a fifth registration response to the second terminal, wherein the fifth registration response includes a third registration area associated with the third radio access technology type. Further, the method further includes: storing an association relationship between the third radio access technology type and the third registration area.

In a possible design, the target radio access technology type is the fourth radio access technology type, and the method further includes: receiving a sixth registration request from the second terminal, wherein the sixth registration request is received by an access network device of the fourth radio access technology type; and sending a sixth registration response to the second terminal, wherein the sixth registration response includes a fourth registration area associated with the fourth radio access technology type. Further, the method further includes: storing an association relationship between the fourth radio access technology type and the fourth registration area.

In a possible design, the target radio access technology type is determined by the second terminal, and the method further includes: receiving a fifth message from the second terminal, where the fifth message includes indication information of the target radio access technology type.

In a possible design, the target radio access technology type is determined by the access and mobility management function network element, and the method further includes: sending a sixth message to the second terminal, where the sixth message includes indication information of the target radio access technology type.

In a possible design, the target radio access technology type is the fourth radio access technology type, and the fourth paging message further includes indication information of the third radio access technology type.

In a possible design, a state corresponding to the third radio access technology type of the second terminal is an idle state.

According to a fifth aspect, a peer-side method according to the fourth aspect is provided. For beneficial effects, refer to the description of the fourth aspect. A paging method is provided. The method is applied to a second terminal, and the method is performed by the second terminal or a module (for example, a chip or a circuit) in the second terminal. the method includes: receiving a fifth paging message, where the fifth paging message is received through a target access network device corresponding to a target radio access technology type, the fifth paging message includes an identifier of the second terminal, and the target radio access technology type is determined by the second terminal or an access and mobility management function network element; and registering, by the second terminal, with the access and mobility management function network element through the access network device of the third radio access technology type and the access network device of the fourth radio access technology type, wherein the target radio access technology type is the third radio access technology type or the fourth radio access technology type; and; when the target radio access technology type is the fourth radio access technology type, the fifth paging message further comprises indication information of the third radio access technology type; or; sending a seventh message to the access and mobility management function network element through the access network device corresponding to the third radio access technology type, wherein the seventh message comprises the identifier of the second session corresponding to the third radio access technology type, and the seventh message is used to request to restore the communication connection of the second session.

In a possible design, the receiving the fifth paging message includes: receiving the fifth paging message based on the target radio access technology type. For example, different radio resource types for transmitting paging messages in different radio access technology types. The third radio access technology type corresponds to the third radio resource, and the fourth radio access technology type corresponds to the fourth radio resource. When the target radio access technology type negotiated by the access and mobility management function network element with the second terminal is the third radio access technology type, the second terminal receives the fifth paging message on the third radio resource. Alternatively, when the target radio access technology type negotiated by the access and mobility management function network element with the second terminal is the fourth radio access technology type, the second terminal receives the fifth paging message on the fourth radio resource.

In a possible design, the target access network device is in a registration area corresponding to the target radio access technology type.

In a possible design, the target radio access technology type is the third radio access technology type, and the method further includes: sending a fifth registration request to the access and mobility management function network element, where the fifth registration request is sent by an access network device of the third radio access technology type; and receiving a fifth registration response from the access and mobility management function network element, where the fifth registration response includes a third registration area associated with the third radio access technology type. Further, the method further includes: storing an association relationship between the third radio access technology type and the third registration area.

In a possible design, the target radio access technology type is the fourth radio access technology type determined by the second terminal. The method further includes: sending a sixth registration request to the access and mobility management function network element, wherein the sixth registration request is sent by an access network device of the fourth radio access technology type; and receiving a sixth registration response from the access and mobility management function network element, wherein the sixth registration response includes the fourth registration area associated with the fourth radio access technology type. Further, the method further includes: storing the association relationship between the fourth radio access technology type and the fourth registration area.

In a possible design, the target radio access technology type is determined by the second terminal. The method further includes: sending a fifth message to the access and mobility management function network element, wherein the fifth message includes indication information for the target radio access technology type.

In a possible design, the target radio access technology type is determined by the access and mobility management function network element. The method further includes: receiving a sixth message from the access and mobility management function network element, wherein the sixth message includes indication information for the target radio access technology type.

In a possible design, the method further includes: determining a fourth cell based on the third radio access technology type, where the fourth cell is a cell provided by an access network device corresponding to the third radio access technology type.

In a possible design, the second terminal is in an idle state corresponding to the third radio access technology type.

According to the sixth aspect, an apparatus is provided. The apparatus can implement the method according to the first aspect or the fourth aspect. For example, the apparatus includes means (means) for performing the method corresponding to the first aspect or the fourth aspect. The apparatus may be implemented by hardware, software, or by hardware executing corresponding software.

In a possible design, the apparatus includes a unit for performing the method according to the first aspect or the fourth aspect.

In a possible design, the apparatus includes a processor, and the processor is configured to perform the method according to the first aspect or the fourth aspect.

In a possible design, the apparatus includes a processor and an interface circuit. The interface circuit is configured to receive a signal from another apparatus outside the apparatus and transmit the signal to the processor, or send a signal from the processor to another apparatus outside the apparatus. The processor is configured to implement the method in the first aspect or the fourth aspect by using a logic circuit or executing code instructions.

In a possible design, the apparatus includes a processor and a memory. The processor is configured to execute a computer program or instruction stored in the memory, so that the apparatus implements the method in the first aspect or the fourth aspect.

Optionally, the apparatus may be the first apparatus, or may be a module or unit (for example, a chip, a chip system, or a circuit) that is in the first apparatus and that is corresponding to the method/operation/step/action described in the first aspect or the fourth aspect and that is used to implement the method/operation/step/action. Alternatively, the apparatus may be capable of being used in conjunction with the first apparatus.

According to the seventh aspect, an apparatus is provided. The apparatus can implement the method in the second aspect, the third aspect, or the fifth aspect. For example, the apparatus includes means (means) for performing the method corresponding to the second aspect, the third aspect, or the fifth aspect. The apparatus may be implemented by hardware, software, or hardware executing corresponding software.

In a possible design, the apparatus includes a unit for performing the second aspect, the third aspect, or the fifth aspect.

In a possible design, the apparatus includes a processor, and the processor is configured to perform the method in the second aspect, the third aspect, or the fifth aspect.

In a possible design, the apparatus includes a processor and an interface circuit. The interface circuit is configured to: receive a signal from another apparatus other than the apparatus and transmit the signal to the processor, or send the signal from the processor to another apparatus other than the apparatus. The processor is configured to implement the method in the second aspect, the third aspect, or the fifth aspect by using a logic circuit or an executable code instruction.

In a possible design, the apparatus includes a processor and a memory. The processor is configured to execute the computer program or instruction stored in the memory, so that the apparatus implements the method in the second aspect, the third aspect, or the fifth aspect.

Optionally, the apparatus may be a second apparatus, or may be modules or units that are in the second apparatus and that are in a one-to-one correspondence and that perform the method/operation/step/action described in the second aspect, the third aspect, or the fifth aspect (e.g., chip, or chip system, or circuit), or capable of being used in conjunction with the second apparatus

Aspect 8: A computer-readable storage medium is provided, storing a computer program or instructions. When the computer program or instructions are run on a computer, the computer is enabled to implement the method of any one of the first aspect to the fifth aspect.

Aspect 9: A computer program product is provided, comprising a computer program or instructions. When the computer program or instructions are run on a computer, the method of any one of the first aspect to the fifth aspect is executed.

Aspect 10: A chip is provided, comprising a processor. The processor is coupled to a memory and is configured to execute the computer program or instructions stored in the memory, so that the chip implements the method of any one of the first aspect to the fifth aspect.

Aspect 11: A communications system is provided, comprising: a first communications apparatus and a second communications apparatus; where, the first communications apparatus is configured to implement the method of the first aspect, and the second communications apparatus is configured to implement the method of the second aspect or the third aspect; or, the first communications apparatus is configured to implement the method of the fourth aspect, and the second communications apparatus is configured to implement the method of the fifth aspect.

### Description of the Drawings

Figure 1 is a schematic diagram of the architecture of a communication system according to an embodiment of this application;
Figures 2a and 2b are schematic diagrams of application scenarios according to an embodiment of this application;
Figures 3 to 8 are schematic flow diagrams of a paging method according to an embodiment of this application;
Figures 9 and 10 are schematic diagrams of the structure of an apparatus according to an embodiment of this application.

### Specific Implementation Manner

In order to make the objectives, technical solutions, and advantages of this application clearer, the following further detailed descriptions of this application are made with reference to the accompanying drawings. Specific operation methods, functional descriptions, etc., in the method embodiments may also be applied to the apparatus embodiments or the system embodiments.

In the embodiments of this application, the various numerical numbers and terms such as "first" and "second" are merely for the convenience of description and are used to distinguish between them. These terms are not intended to limit the scope of the embodiments of this application. The sequence numbers of the above processes do not necessarily indicate the execution sequence. The execution sequence of the processes should be determined by their functions and internal logic.

In the embodiments of this application, for the number of nouns, unless otherwise specified, it is expressed as "a singular noun or a plural noun," that is, "one or more." "At least one" refers to one or more, and "multiple" refers to two or more. "And/or" describes the association relationship between associated objects, indicating that three relationships may exist. For example, A and/or B may indicate the following situations: A alone, A and B together, and B alone. Here, A and B may be singular or plural.

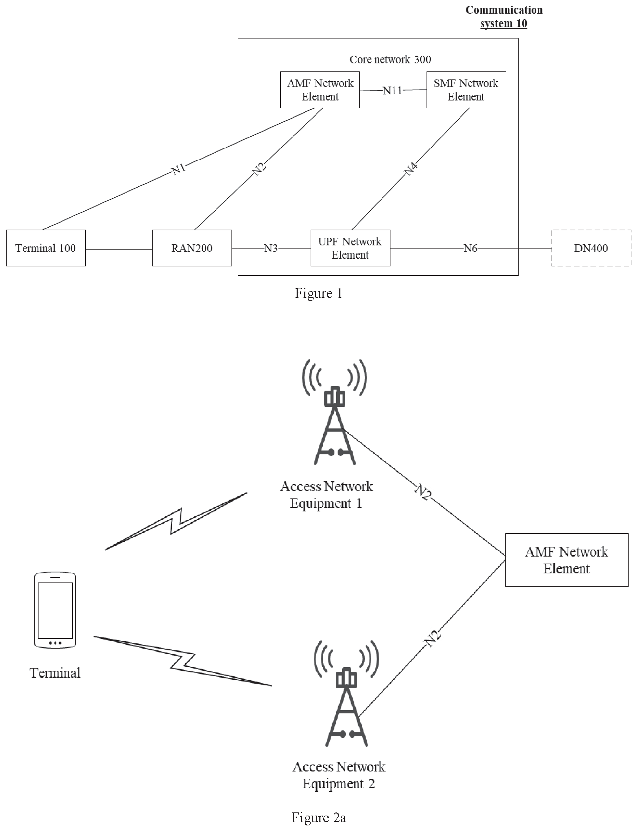

FIG. 1 shows a possible, non-limiting schematic diagram of a system. As shown in FIG. 1, the communications system 10 includes a terminal 100, a radio access network (radio access network, RAN) 200, and a core network (core network, CN) 300.

Among them, the terminal 100 may also be referred to as a terminal device, user equipment (user equipment, UE), a mobile station, a mobile terminal, or the like. The terminal can be widely applied in various scenarios, for example, device-to-device (device-to-device, D2D), vehicle-to-everything (vehicle to everything, V2X) communication, machine-type communication (machine-type communication, MTC), the Internet of Things (internet of things, IOT), virtual reality (virtual reality, VR), augmented reality (augmented reality, AR), industrial control, autonomous driving, telemedicine, smart grid, smart furniture, smart office, smart wearable devices, smart transportation, smart cities, and the like. The terminal may be a mobile phone, a head-mounted display device, a tablet computer, a computer with a wireless transceiver function, a wearable device, a vehicle, an unmanned aerial vehicle, a helicopter, an airplane, a ship, a robot, a robotic arm, a smart home device, or the like. The embodiments of this application do not limit a device form of the terminal.

RAN200 includes at least one RAN node. Terminal 100 may be connected to the RAN node in a wireless manner. The RAN node is connected to the core network 300 in a wireless or wired manner. The core network device in the core network 300 and the RAN node in the RAN200 may be different physical devices, or may be the same physical device that integrates the logical functions of the core network device and the logical functions of the radio access device.

RAN200 may be a cellular system related to the 3rd Generation Partnership Project (3rd generation partnership project, 3GPP). For example, the cellular system may be a 4th generation (4th generation, 4G) mobile communication system, a 5th generation (5th generation, 5G) mobile communication system, or a futureoriented evolution system, for example, a 6th generation (6th generation, 6G) mobile communication system. RAN200 may also be an open access network (open RAN, O-RAN, or ORAN), a cloud radio access network (cloud radio access network, CRAN), or a wireless fidelity (wireless fidelity, WiFi) system. RAN200 may also be a communications system formed by the integration of the above two or more systems.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB) in a 6G mobile communications system, a next generation NodeB in a future mobile communications system, a base station in a future mobile communications system, or an access node in a WiFi system. The RAN node may be a macro base station, a micro base station, an indoor base station, a relay node, or a donor node, or a wireless controller in a CRAN scenario. Optionally, the RAN node may alternatively be a server, a wearable device, a vehicle, or an in-vehicle device. For example, in vehicle-to-everything (vehicle to everything, V2X) technology, an access network device may be a road side unit (road side unit, RSU). All or some of the functions of the RAN node in the embodiments of this application may be implemented by a software function running on hardware. Alternatively, the functions may be implemented by virtualization functions instantiated on a platform (for example, a cloud platform). The RAN node in the embodiments of this application may alternatively be a logical node, a logical module, or software that can implement all or some functions of the RAN node.

In another possible scenario, multiple RAN nodes collaborate to assist a terminal in achieving wireless access. Different RAN nodes respectively implement some functions of a base station. For example, a RAN node may be a central unit (central unit, CU), a distributed unit (distributed unit, DU)), a CU-control plane (control plane, CP), a CU-user plane (user plane, UP), or a radio unit (radio unit, RU), etc. The CU and DU may be separately disposed, or may also be included in the same network element, for example, in a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different systems, the CU (or CU-CP and CU-UP), DU, or RU may also have different names. However, a person skilled in the art can understand their meanings. For example, in the ORAN system, the CU can also be referred to as O-CU (Open CU), the DU can also be referred to as O-DU, the CU-CP can also be referred to as O-CU-CP, the CU-UP can also be referred to as O-CU-UP, and the RU can also be referred to as O-RU. For ease of description, in this application, the CU, CU-CP, CU-UP, DU, and RU are used as examples for description. Any one of the CU (or CU-CP, CU-UP), DU, and RU in this application may be implemented by using a software module, a hardware module, or a combination of a software module and a hardware module.

A RAN node, sometimes also referred to as an access network device, a RAN entity, or an access node, constitutes a part of a communications system and is used to help a terminal achieve wireless access. In subsequent descriptions of this application, unless otherwise specified, "access network device" is used for description. The plurality of RAN nodes in RAN 200 may be nodes of the same type, or may be nodes of different types. Under the service-oriented architecture of the access network, the "access network device" may also be replaced by an access network function (access network function, ANF) network element.

The core network 300 includes a user plane function (user plane function, UPF) network element, an access and mobility management function (access and mobility management function, AMF) network element, and a session management function (session management function, SMF) network element. In the embodiments of this application, the access and mobility management function network element may be replaced with an access management function network element or a registration management function network element.

The UPF network element is primarily responsible for forwarding and receiving user data in a terminal. For example, the UPF may receive user data from a data network (data network, DN), and forward the user data to the terminal through an access network device. Alternatively, the UPF may receive user data from the terminal and forward the user data to the DN. The transmission resources and scheduling functions provided by the UPF network element for the terminal are managed and controlled by the SMF network element.

The AMF network element is mainly responsible for a signaling processing part, for example, functions such as access control, mobility management, attachment and detach, and gateway selection. When providing a service for a session in the terminal, the AMF network element may provide a control plane storage resource, a storage session identifier, an SMF network element identifier associated with the session identifier, and the like for the session.

The SMF network element is mainly responsible for user plane network element selection, user plane network element redirection, Internet (internet protocol, IP) address allocation, bearer establishment, modification, and release, quality of service (quality of service, QoS) control, and the like.

Optionally, the communications system 10 further includes a DN 400. The terminal, the access network device, the UPF network element, and the DN may be generally referred to as a user plane function and an entity. A data stream of the user may be transmitted by using a protocol data unit (protocol data unit, PDU) session established between the terminal and the DN. The user plane is used to bear service data. Some other network elements in the communications system 10, such as the SMF network element and the AMF network element, may be referred to as control plane functions and entities, and are mainly responsible for functions such as authentication and authentication, registration management, session management, mobility management, and policy control, so as to implement reliable and stable transmission of a user plane data stream. The control plane is used to carry signaling messages.

In this embodiment of this application, the terminal and the AMF network element may interact with each other through an N1 interface, and a message exchanged between the terminal and the AMF network element may be referred to as an N1 message (message). Similarly, interfaces between the access network device and the AMF network element and between the access network device and the UPF network element are respectively an N2 interface and an N3 interface, and messages exchanged between the access network device and the UPF network element may be respectively referred to as an N2 message and an N3 message. An interface between the UPF network element and the SMF network element is an N4 interface, an interface between the UPF network element and the DN is an N6 interface, and an interface between the AMF network element and the SMF network element is an N11 interface. Messages exchanged by the N4 message, an N6 message, an N11 message, and the like may be respectively referred to as an N4 message, an N6 message, and the like.

It may be understood that a name of each network element in the core network 300 is not limited. For example, in a 5G communications system, a network element implementing a signaling processing part is referred to as an AMF network element. In the 6G communications system, a network element implementing the foregoing functions may also be referred to as another name or the like, and There is no limitation in this regard. In subsequent descriptions, a name of each network element in 5G is mainly used as an example to describe the solutions in the embodiments of this application. Optionally, the core network 300 may further include another network element of a control plane function and an entity. for example, a network exposure function (network exposure function, NEF) network element, an application function (application function, AF) network element, a policy control function (policy control function, PCF) network element, and a network slice selection function (network slice selection function, NSSF) network element, a unified data management (unified data management, UDM) network element, an authentication server function (authentication server function, AUSF) network element, a network repository function (network repository function, NRF) network element, and a unified data repository function (unified data repository, UDR) network element, a network data analytics function (network data analytics function, NWDAF) network element, and the like.

It may be understood that an access network device, a terminal, a network element in a core network, and the like may be referred to as a communications apparatus. For example, the access network device may be understood as a communications apparatus with a base station function, a terminal may be understood as a communications apparatus with a terminal function, and a network element in a core network, for example, The AMF may be understood as a communications apparatus having an AMF function.

With development of communications technologies, a terminal may have a dual connectivity function. A subscriber identity module (subscriber identity module, SIM) card is installed on the terminal. In the dual connectivity module, the terminal may connect to two access network devices, and maintain a radio resource control (radio resource control, RRC) signaling connection with the two access network devices. transmitting the same data or different data through two access network devices.

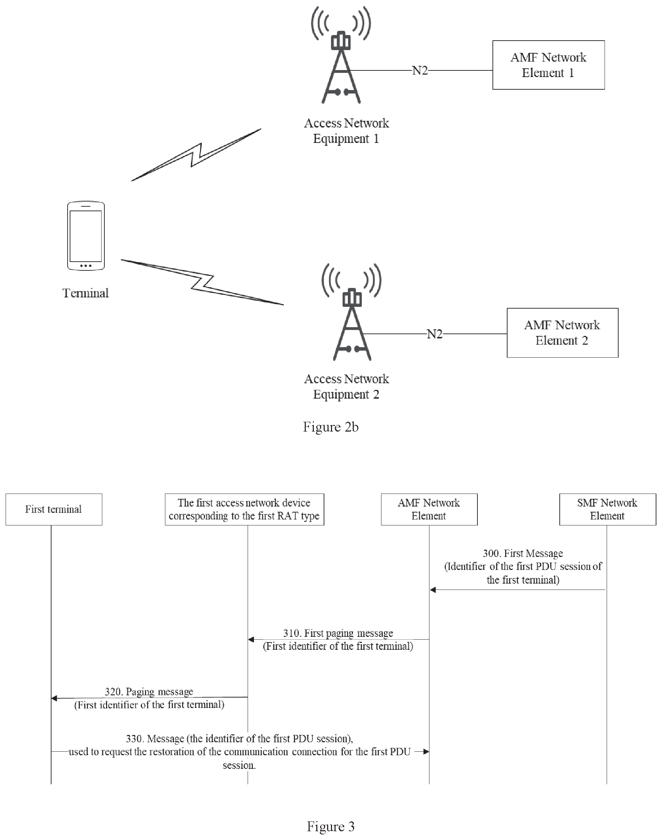

For example, as shown in FIG. 2a, the terminal is connected to a same AMF network element through two access network devices. Alternatively, as shown in FIG. 2b, the terminal is separately connected to different AMF network elements through two access network devices. In FIG. 2b, two AMF network elements may belong to a same or different public land mobile network (public land mobile network, PLMN), and There is no limitation in this regard. Both the two access network devices are access network devices of a 3GPP access type, and the two access network devices have different radio access technology (radio access technology, RAT) types. For example, the RAT type of the access network device 1 is a 5G RAT, and the RAT type of the access network device 2 is a 6G RAT. For another example, a RAT type of the access network device 1 is a 5G new radio (new radio, NR), and a RAT type of the access network device 2 is a satellite 5G NR.

In the downlink data transmission of a terminal, when the UPF network element receives downlink data (downlink data) from the DN, the UPF network element may send a data notification (data notification) to the SMF network element. The SMF network element may send a data notification acknowledgment (data notification Ack) to the UPF network element. The SMF network element may send an N1N2 message transfer (N1N2 message transfer)) to the AMF network element. The AMF network element may send an N1N2 message transfer response (N1N2 message transfer response)) to the SMF network element. When the terminal is in an idle state, how the AMF network element determines, from two access network devices of different RAT types, an access network device of a specific RAT type to page the terminal, in order to restore the communication connection of the session, is a technical problem to be resolved in the embodiments of this application.

In view of this, an embodiment of this application provides a paging method, comprising: When an AMF network element receives a first message of an SMF network element, the first message includes an identifier of a first session of a first terminal. Optionally, the first session may be a first PDU session. In the following description, the first PDU session is used as an example for description. The AMF network element sends the first paging message to the first access network device corresponding to the first RAT type associated with the first PDU session, so as to page the first terminal and restore the communication connection of the first PDU session.

As shown in FIG. 3, a schematic flowchart is provided, comprising:
Step 300: The SMF network element sends a first message to the AMF network element, and the AMF network element receives the first message from the SMF network element.

In a possible implementation, when the SMF network element receives the downlink data notification of the first PDU session of the first terminal from the UPF network element, the SMF network element sends the first message to the AMF network element. Optionally, the first message may be an N1N2 message transfer message. The first message includes the identifier of the first PDU session of the first terminal. The AMF network element may determine, based on the stored association relationship between the first PDU session and the first RAT type, the first RAT type associated with the first PDU session. For example, the first terminal sends the PDU session establishment request message to the AMF network element through the access network device of the first RAT type, where the PDU session establishment request message includes the identifier of the first PDU session, and the PDU session establishment request is used to request to establish the first PDU session. When receiving the PDU session establishment request, the AMF network element may establish the association relationship between the first PDU session and the first RAT type. The AMF network element may maintain a state of the first terminal in the first RAT type and the second RAT type. When the state that is maintained by the AMF and that is of the first terminal in the first RAT is the idle state, in step 310, the AMF network element pages the first terminal through the first access network device corresponding to the first RAT type. In the description of this embodiment of this application, the association relationship between the first PDU session and the first RAT type may alternatively be described as follows: The first PDU session is associated with the first RAT type, or the first terminal establishes the first PDU session through an access network device corresponding to the first RAT type; or The first PDU session is established on an access network device corresponding to the first RAT type, and the like.

In this embodiment of this application, the first terminal registers with (or is connected to) the AMF network element through the access network device of the first RAT type and the access network device of the second RAT type. The first RAT type is different from the second RAT type. For example, the first RAT type is a 5G RAT, and the second RAT type is a 6G RAT. Alternatively, the first RAT type is 5G NR, and the second RAT type is satellite 5G NR.

Step 310: The AMF network element sends a first paging message to a first access network device corresponding to a first RAT type, and the first access network device corresponding to the first RAT type receives a first paging message from the AMF network element, where the first paging message includes a first identifier of the first terminal.

Optionally, the first paging message is a next generation access point (next generation access point, NGAP) paging message.

Step 320: The first access network device of the first RAT type sends a paging message (In the following description, the paging message may be referred to as a second paging message or a third paging message.) The paging message includes the first identifier of the first terminal.

In a possible implementation, when the first terminal receives the paging message, the first terminal determines whether the first identifier of the first terminal included in the paging message belongs to itself. If it belongs, it indicates that the network is paging the first terminal. The first terminal may resume or establish an RRC connection with the access network device of the first RAT type. Further, in step 330, the first terminal requests to resume the communication connection of the first PDU session associated with the first RAT type.

Step 330: The first terminal sends a message to the AMF network element through the access network device corresponding to the first RAT type. (In the following description, the message is referred to as a second message or a third message). The message includes an identifier of the first PDU session, and the message is used to request to resume the communication connection of the first PDU session. Optionally, the message may be a service request (service request) message.

In the description of this application, the first access network device corresponding to the first RAT type may refer to one access network device, or multiple access network devices. In a possible implementation, the RAT type includes: 5G RAT and 6G RAT. The 5G RAT may be divided into: 5G NR and satellite 5G NR. The satellite 5G NR may be divided into low earth orbit (low earth orbit, LEO), medium earth orbit (medium earth orbit, MEO), and geostationary earth orbit (geostationary earth orbit, GEO), etc.

The following text uses four examples to elaborate in detail on the solutions within the process shown in Figure 3.

Example 1: The first terminal connects to the same AMF network element through an access network device of the first RAT type and an access network device of the second RAT type. The AMF network element allocates a corresponding registration area (registration area, RA) for different RAT types, and stores the correspondence between the RAT type and the RA. The AMF network element sends a first paging message to the access network corresponding to the RA corresponding to the RAT type.

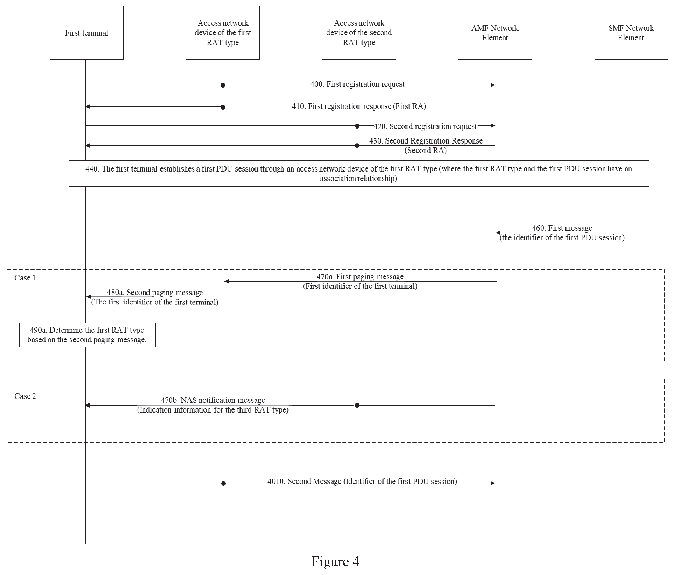

As shown in Figure 4, a flowchart is provided, comprising:
Step 400: The first terminal sends a first registration request to an AMF network element through an access network device of a first RAT type. The AMF network element receives the first registration request from the first terminal through the access network device of the first RAT type.

For example, as shown in Figure 4, a flowchart is provided, comprising:
Optionally, when the first registration request includes information about the capability of the first terminal to access a network through two access network devices of a first RAT type, the AMF network element allocates a corresponding first RA for the first RAT type. However, if the first registration request does not include information about the capability of the first terminal to access a network through two access network devices of a 3GPP access type, the AMF network element allocates a corresponding first RA for the 3GPP access type. However, the first RAT type is not associated with the first RA.

Optionally, when the first terminal only registers with the AMF network element through an access network device of a first RAT type, the AMF network element allocates a corresponding first RA for the 3GPP access type. However, the first RAT type is not associated with the first RA.

Optionally, the AMF network element obtains, from the PCF network element or the UDM network element, whether the first terminal is authorized to access a network through two access network devices of a 3GPP access type. If the first terminal is authorized to access a network through two access network devices, the AMF network element allocates a corresponding first RA for the first RAT type. If the first terminal is not authorized to access a network through two access network devices, the AMF network element allocates a corresponding registration area for the 3GPP access type.

Step 410: The AMF network element sends a first registration response to the first terminal, and the first terminal receives the first registration response from the AMF network element. Optionally, the first registration response includes the first RA corresponding to the first RAT type.

For example, in the first registration response, the first terminal obtains the first RA corresponding to the first RAT type, and the first terminal stores the association relationship between the first RAT type and the first RA. It can be understood that the first registration response is transmitted by an access network device corresponding to the first RAT type. For example, the AMF network element may send the first registration response to the first terminal through the access network device corresponding to the first RAT type. The first terminal may receive the first registration response from the AMF network element through the access network device corresponding to the first RAT type. Optionally, the first registration response may be referred to as a registration accept message (registration accept message).

Optionally, in this case, the state of the first terminal maintained by the AMF network element in the first RAT type is a connected state.

Step 420: The first terminal sends a second registration request to the AMF network element through an access network device of the second RAT type. The AMF network element receives the second registration request from the first terminal through the access network device of the second RAT type.

For example, when the AMF network element receives a second registration request, the AMF network element allocates a corresponding second RA for the second RAT type through the access network device of the second RAT type. The AMF network element stores the association relationship between the second RAT type and the second RA. Optionally, the second registration request may be referred to as a registration request message.

It should be noted that, when the first terminal is in a dual connectivity mode, or when the first terminal wants to access the network through dual connectivity, step 420 is performed.

Optionally, when the first terminal sends a registration request to the AMF network element through the access network device of the first RAT type (step 400), the AMF network element allocates a corresponding first RA for the 3GPP access type. When the first terminal further sends a registration request to the AMF network element through the access network device of the second RAT type (step 420), the AMF network element allocates a corresponding second RA for the second RAT type, and at the same time establishes an association between the first RAT type and the first RA.

Step 430: The AMF network element sends a second registration response to the first terminal. The first terminal receives the second registration response from the AMF network element. Optionally, the second registration response includes the second RA corresponding to the second RAT type.

For example, in the second registration response, the first terminal obtains the second RA corresponding to the second RAT type, and the first terminal stores the association relationship between the second RAT type and the second RA. It can be understood that the AMF network element may send the second registration response to the first terminal through an access network device corresponding to the second RAT type. The first terminal may receive the second registration response from the AMF network element through the access network device corresponding to the second RAT type. Optionally, the second registration response may be referred to as a registration accept message.

Optionally, at this time, the state of the first terminal maintained by the AMF network element in the second RAT type is a connected state.

Step 440: The first terminal establishes a first PDU session through an access network device of a first RAT type.

In a possible implementation, the first terminal sends the PDU session establishment request message to the AMF network element through the access network device of the first RAT type, where the PDU session establishment request message includes the identifier of the first PDU session, and after the AMF network element selects the SMF network element, send a session management context setup request message to the SMF network element, where the session management context setup request message includes the identifier of the first PDU session, and the SMF network element selects a UPF for the first PDU session, and establishes a transmission channel between the access network device of the first RAT type and the UPF.

In downlink data transmission, a transmission path of data of the first PDU session is: DN → UPF → access network device of the first RAT type → first terminal. The data of the first PDU session is transmitted through the access network device of the first RAT type. The AMF network element and the first terminal may store the association relationship between the first PDU session and the first RAT type. Optionally, the AMF network element may further send the association relationship between the first PDU session and the first RAT type to the SMF network element, and the SMF network element stores the association relationship between the first PDU session and the first RAT type.

Step 460: When the SMF network element receives, from the UPF network element, a downlink data notification of the first PDU session, the SMF network element sends a first message to the AMF network element, and the AMF network element receives the first message from the SMF network element. Optionally, the first message may be an N1N2 message transfer message.

Among them, the first message includes an identifier of the first PDU session. Optionally, the first message further includes indication information for the first RAT type. In a possible implementation, as described in step 440, the SMF network element may store an association relationship between the first PDU session and the first RAT type. When the SMF network element receives, from the UPF network element, a downlink data notification of the first PDU session, the SMF network element may determine, based on the stored association relationship between the first PDU session and the first RAT type, the first RAT type corresponding to the first PDU session, and notify the AMF network element of the first RAT type through the first message. Further, optionally, the first message further includes indication information for the 3GPP access type. For example, when the AMF network element receives the first message, and obtains the indication information for the 3GPP access type from the first message, the subsequent steps 470a to 4010 are performed.

In a possible implementation, the AMF network element may maintain, for the first terminal, a state corresponding to the first RAT type and a state corresponding to the second RAT type. For example, the first terminal is disconnected from the access network device of the first RAT type. Therefore, the state corresponding to the first RAT type and the state corresponding to the second RAT type that the AMF network element maintains for the first terminal are both in an idle state. If the first terminal maintains a connection with the access network device of the second RAT type, the state corresponding to the second RAT type that the AMF network element maintains for the first terminal is in a connected state, otherwise, it is in an idle state.

Scenario 1: The first terminal is disconnected from both the access network device of the first RAT type and the access network device of the second RAT type. Optionally, at this time, the state corresponding to the first RAT type and the state corresponding to the second RAT type that the AMF network element maintains for the first terminal are both in an idle state. For Scenario 1, steps 470a, 480a, and 490a are performed.

In a possible implementation, since the first PDU session is established through the access network device of the first RAT type, when the first terminal is disconnected from the access network device of the first RAT type, the communication of the first PDU session will be interrupted. The AMF network element may subsequently page the first terminal through subsequent steps, thereby restoring or establishing a connection between the first terminal and the access network device of the first RAT type, and further restoring the communication connection of the first PDU session.

Step 470a: The AMF network element sends a first paging message to the first access network device corresponding to the first RAT type. The first access network device corresponding to the first RAT type receives the first paging message from the AMF network element. The first paging message includes the first identifier of the first terminal. Optionally, the first paging message may be an NGAP paging message.

In the description of step 440, the AMF network element stores an association relationship between the first PDU session and the first RAT type. Therefore, in step 470a, the AMF network element may determine the first RAT type associated with the first PDU session based on the stored association relationship between the first PDU session and the first RAT type. In a possible implementation, the AMF network element determines the first RAT type associated with the first PDU session based on the association relationship between the PDU session and the RAT type. In a communications system, in addition to the first PDU session, there may be other PDU sessions. The AMF network element may store an association relationship between at least one PDU session and the RAT type. The AMF network element queries, in the stored association relationship, the first RAT type associated with the first PDU session. Alternatively, the first message includes indication information of the first RAT type, and the AMF network element may determine the first RAT type based on the indication information of the first RAT type included in the first message.

In the description of step 400, the AMF network element stores the association relationship between the first RAT type and the first RA. The AMF network element can determine the first RA corresponding to the first RAT type based on the stored association relationship between the first RAT type and the first RA. Optionally, the RA includes a tracking area identity (tracking Area identity, TAI) list, and the TAI list includes at least one tracking area (tracking area, TA), and each TA includes at least one cell. The AMF network element can determine the at least one cell based on the first RA. The AMF network element determines the access network device that provides the at least one cell, which is referred to as the first access network device in step 470a. The first access network device is in the first RA corresponding to the first RAT type. It can be understood that the first access network device may refer to one or more access network devices.

Optionally, the first identifier of the first terminal may be a short temporary mobile subscriber identity (short-temporary mobile subscriber identity, S-TMSI) of the first terminal. In addition to the first identifier of the first terminal, the first paging message may further include indication information of the first RAT type.

Step 480a: The first access network device corresponding to the first RAT type sends a second paging message. The first terminal receives the second paging message through the first access network device corresponding to the first RAT type. The second paging message includes the first identifier of the first terminal.

For example, the first access network device corresponding to the first RAT type may broadcast the second paging message. When the first terminal is located within the receiving area of the broadcast, the first terminal may receive the second paging message. Optionally, the first terminal determines whether the identifier of the terminal included in the second paging message is an identifier of the first terminal. If the identifier is an identifier of the first terminal, that is, the identifier is the identifier of the first terminal, it indicates that the network is paging the first terminal, and the first terminal may resume the RRC connection of the first access network device corresponding to the first RAT type. Otherwise, the first terminal may continue to remain in an idle state.

Step 490a: The first terminal determines the first RAT type based on the second paging message.

In a possible implementation, the first terminal determines the first RAT type based on the second paging message. For example, the second paging message includes indication information of the first RAT type. The first terminal determines the first RAT type based on the indication information of the first RAT type. Alternatively, the first terminal determines the first RAT type based on a radio resource used to receive the second paging message. For example, radio resources used to transmit the second paging message vary according to different RAT types. The first RAT type corresponds to the first radio resource, and the second RAT type corresponds to the second radio resource. When the radio resource used by the first terminal to receive the second paging message is the first radio resource, the first terminal may determine that the first radio resource corresponds to the first RAT type.

In step 440, the first terminal stores the association relationship between the first RAT type and the first PDU session. The first terminal may determine the first PDU session based on the stored association relationship between the first RAT type and the first PDU session. The first terminal may request to restore the communication connection of the first PDU session by performing step 4010.

Scenario 2: The first terminal is disconnected from the access network device of the first RAT type, but remains connected to the access network device of the second RAT type. Optionally, at this time, the AMF network element maintains that the first terminal in the first RAT type is in an idle state, and the AMF network element maintains that the first terminal in the second RAT type is in a connected state. For Scenario 2, step 470b is performed.

Step 470b: The AMF network element sends, through the access network device of the second RAT type, a non-access stratum (non-access stratum, NAS) notification message (NAS notification message) to the first terminal. The first terminal receives, through the access network device of the second RAT type, the NAS notification message from the AMF network element. The NAS notification message includes indication information of the first RAT type.

In a possible implementation, the first terminal may determine the first PDU session based on the association relationship that is between the first RAT type and the first PDU session and that is stored in step 440. The first terminal requests, through step 4010, to restore the communication connection for the first PDU session.

Step 4010: The first terminal sends a second message to the AMF network element through a second access network device corresponding to the first RAT type. The AMF network element receives the second message from the first terminal through the second access network device corresponding to the first RAT type.

In a possible implementation, before the first terminal requests to restore the communication connection of the first PDU session in step 4010, the first terminal establishes the RRC connection to the second access network device corresponding to the first RAT type. Then, in step 4010, The first terminal sends the second message to the AMF network element through the second access network device corresponding to the first RAT type. For example, the first terminal determines the first cell based on the first RAT type, where the first cell is a cell provided by the second access network device. In a possible implementation, there is at least one cell under the access network device, and the access network device may send a broadcast message through the at least one cell. The broadcast message includes indication information of a RAT type of the access network device. The first terminal selects, from the received broadcast message, a cell whose RAT type is the first RAT type, where the cell is referred to as the first cell. It may be understood that the first cell may be one cell or multiple cells. The first terminal establishes an RRC connection to the second access network device providing the first cell. Optionally, the second access network device may be an access network device.

In a possible implementation, the first terminal sends a second message to a second access network device corresponding to the first RAT type. The second access network device corresponding to the first RAT type sends the second message to the AMF network element. The second message includes an identifier of a first PDU session associated with the first RAT type, and the second message is used to request to restore a communication connection of the first PDU session. Optionally, the second message may be a service request message. Optionally, when receiving the second message, the AMF network element may send a notification message to the SMF network element, and the SMF network element restores the communication connection of the first PDU session.

It can be understood that, in the scenario of situation 2, the AMF network element may also use the solution in situation 1 to restore the communication connection of the first PDU session, which is not limited.

In the embodiments of this application, the first paging message, the second paging message, or the NAS notification message includes the indication information of the first RAT type. The indication information of the first RAT type is used to indicate the first terminal to restore a connection between the first terminal and the access network device of the first RAT type. For example, the first terminal is instructed to restore an air interface connection and an upper-layer service connection between the first terminal and the access network device of the first RAT type. For example, the communication connection of the first PDU session corresponding to the first RAT type is restored. Alternatively, the indication information of the first RAT type is used to indicate that the first PDU session corresponding to the first RAT type has downlink data arrival,

Through the above method, when the first terminal adopts a dual 3GPP access mode, connects to two access network devices, and the RAT types of these two access network devices are different: When the AMF receives a notification that downlink data for a certain PDU session has arrived, the AMF network element can determine a certain RAT type based on the association relationship between the PDU session and the RAT type. Further, the AMF network element determines the RA corresponding to the RAT type based on the maintained correspondence between different RAT types and RAs. The AMF then pings the first terminal through the access network device corresponding to the RA, thereby achieving the pinging of the first terminal and further restoring the communication connection of the PDU session.

Example 2: The first terminal is connected to the same AMF network element through an access network device of a first RAT type and an access network device of a second RAT type. The AMF network element allocates different identifiers of the first terminal to different RAT types, and stores the correspondence between the RAT type and the identifier of the first terminal. The first terminal determines the first RAT type based on the identifier of the first terminal included in the paging message.

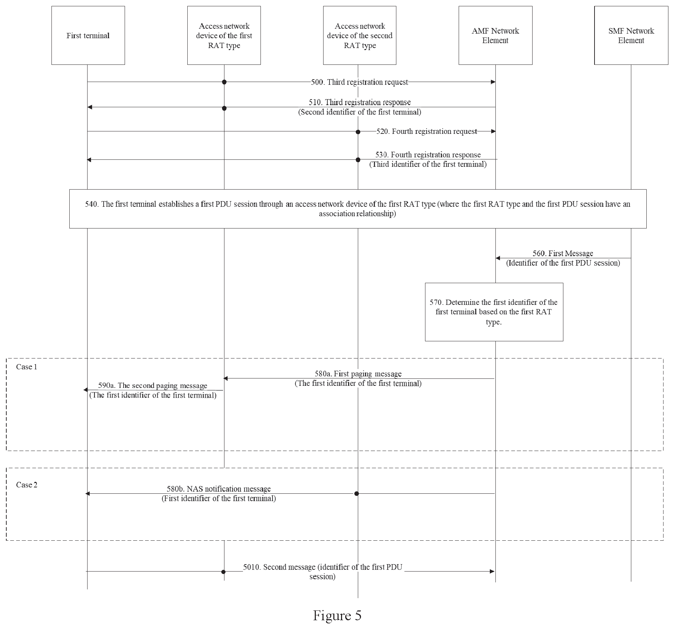

As shown in FIG. 5, a schematic flowchart is provided, comprising:
Step 500: A first terminal sends a third registration request to an AMF network element through an access network device of a first RAT type. The AMF network element receives the third registration request from the first terminal through the access network device of the first RAT type.

Step 510: The AMF network element sends a third registration response to the first terminal through the access network device of the first RAT type. The first terminal receives the third registration response from the AMF network element through the access network device of the first RAT type.

In a possible implementation, when the AMF network element receives the third registration request, the AMF network element allocates the second identifier of the first terminal to the first RAT type. The third registration response includes the second identifier of the first terminal. Optionally, the second identifier of the first terminal may be a globally unique temporary UE identity (globally unique temporary UE identity, GUTI) of the first terminal. The second identifier of the first terminal includes the first identifier of the first terminal. Optionally, the first identifier of the first terminal may be an S-TMSI of the first terminal. The AMF network element and the first terminal may store an association relationship between the second identifier of the first terminal and the first RAT type, or store an association relationship between the first identifier of the first terminal and the first RAT type.

Optionally, when the third registration request includes information about the capability of the first terminal to access a network through two access network devices of a first RAT type, the AMF network element allocates a second identifier of the first terminal for the first RAT type. If the first registration request does not include information about the capability of the first terminal to access a network through two access network devices of a 3GPP access type, the AMF network element allocates a second identifier of the first terminal, but the second identifier of the first terminal is not associated with the first RAT type.

Optionally, when the first terminal registers with the AMF network element only through an access network device of a first RAT type, the AMF network element allocates a second identifier of the first terminal for the first RAT type. However, the second identifier of the first terminal is not associated with the first RAT type.

Optionally, the AMF network element obtains, from the PCF network element or the UDM network element, whether the first terminal is authorized to access a network through two access network devices of a 3GPP access type. If the first terminal is authorized to access a network through two access network devices, the AMF network element allocates a second identifier of the first terminal for the first RAT type. If the first terminal is not authorized to access a network through two access network devices, the AMF network element allocates a second identifier of the first terminal, but the second identifier of the first terminal is not associated with the first RAT type.

Optionally, in this case, the state that is of the first terminal in the first RAT type and that is maintained by the AMF network element is the connected state.

Step 520: The first terminal sends a fourth registration request to the AMF network element through the access network device of the second RAT type. The AMF network element receives the fourth registration request from the first terminal through the access network device of the second RAT type.

It should be noted that the first terminal performs step 520 in a dual connectivity mode or in a case in which the first terminal wishes to access a network through dual connectivity.

Step 530: The AMF network element sends a fourth registration response to the first terminal through the access network device of the second RAT type. The first terminal receives the fourth registration response from the AMF network element through the access network device of the second RAT type.

In a possible implementation, when the AMF network element receives the fourth registration request, the AMF network element allocates the third identifier of the first terminal to the second RAT type. Optionally, the third identifier of the first terminal may be a GUTI of the first terminal. The fourth registration response includes the third identifier of the first terminal. The third identifier of the first terminal includes a fourth identifier of the first terminal. Optionally, the fourth identifier of the first terminal may be an S-TMSI of the first terminal. The AMF network element and the first terminal may store an association relationship between the third identifier of the first terminal and the second RAT type, or store an association relationship between the fourth identifier of the first terminal and the second RAT type.

In a possible implementation, the third registration request and the fourth registration request may be registration request messages. The third registration response and the fourth registration response may be registration accept messages. When the first RAT type or the second RAT type is the 5G RAT, the GUTI of the first terminal is the 5G-GUTI, and the S-TMSI of the first terminal is the 5G-S-TMSI. Alternatively, when the first RAT type or the second RAT type is a 6G RAT, the GUTI of the first terminal is a 6G-GUTI, and the S-TMSI of the first terminal is a 6G-S-TMSI.

Optionally, when the first terminal sends the registration request to the AMF network element through the access network device of the first RAT type (step 500), the AMF network element allocates a second identifier of the first terminal, but the second identifier of the first terminal is not associated with the first RAT type. When the first terminal sends the registration request to the AMF network element through the access network device of the second RAT type (step 520), the AMF network element allocates a third identifier of the first terminal to the second RAT type, and establishes an association between the second identifier of the first terminal and the first RAT type.

Optionally, at this time, the AMF network element maintains a state of the first terminal in the second RAT type, which is a connected state.

Step 560: The first terminal establishes a first PDU session through an access network device of the first RAT type, when the SMF network element receives a downlink data notification of the first PDU session from the UPF network element.

In a possible implementation, the AMF network element and the first terminal may store an association relationship between the first PDU session and the first RAT type. Optionally, the AMF network element may further send the association relationship between the first PDU session and the first RAT type to the SMF network element, and the SMF network element stores the association relationship between the first PDU session and the first RAT type.

Step 560: When the SMF network element receives a downlink data notification of the first PDU session from the UPF network element, the SMF network element sends a first message to the AMF network element. The AMF network element receives the first message from the SMF network element. Optionally, the first message may be an N1N2 message transfer message.

Among them, the first message includes an identifier of the first PDU session. Optionally, the first message further includes indication information of the first RAT type. Further, the first message further includes indication information of the 3GPP access type.

In a possible implementation, when receiving the first message, the AMF network element may obtain the identifier of the first PDU session from the first message. The AMF network element determines the first RAT type based on the stored association relationship between the first PDU session and the first RAT type.

In another possible implementation, when the SMF network element receives the downlink data notification for the first PDU session, the SMF network element may determine the first RAT type based on the stored association relationship between the first PDU session and the first RAT type. The first message sent by the SMF network element to the AMF network element includes the indication information of the first RAT type. The AMF network element determines the first RAT type based on the indication information that is of the first RAT type and that is included in the first message.

Step 570: The AMF network element determines a first identifier of the first terminal based on the first RAT type.

In a possible implementation, the AMF network element determines the first identifier of the first terminal based on a stored association relationship between the first RAT type and the first identifier of the first terminal. Alternatively, the AMF network element determines the second identifier of the first terminal based on a stored association between the first RAT type and the second identifier of the first terminal. Because the second identifier of the first terminal includes the first identifier of the first terminal, the terminal may obtain the first identifier of the first terminal from the second identifier of the first terminal.

Case 1: The first terminal is disconnected from both the access network device of the first RAT type and the access network device of the second RAT type. Optionally, in this case, both the first RAT type and the second RAT type of the first terminal are in the idle mode and maintained by the AMF network element. For the case 1, steps 580a and 590a are performed.

Step 580a: The AMF network element sends a first paging message to a first access network device corresponding to the first RAT type, and the first access network device of the first RAT type receives a first paging message from the AMF network element, where the first paging message includes a first identifier of the first terminal. Optionally, the first paging message may be an NGAP paging message.

Step 590a: The first access network device corresponding to the first RAT type sends a second paging message, and the first terminal receives the second paging message through the first access network device corresponding to the first RAT type, where the second paging message includes the first identifier of the first terminal.

For an implementation process of step 580a and step 590a, refer to the description of step 470a and step 480a. A difference is that when receiving the second paging message, the first terminal obtains the first identifier of the first terminal from the second paging message. The first terminal determines the first RAT type based on the first identifier of the first terminal. For example, the first terminal may determine the first RAT type based on a stored association relationship between the first identifier of the first terminal and the first RAT type, or based on a stored association relationship between the second identifier of the first terminal and the first RAT type. Further, optionally, the first terminal determines the first PDU session based on the stored association relationship between the first PDU session and the first RAT type. In step 5010, the first terminal restores the communication connection for the first PDU session through the second access network device of the first RAT type.

Case 2: The first terminal is disconnected from the access network device of the first RAT type, and remains connected to the access network device of the second RAT type. Optionally, in this case, the state of the first terminal in the first RAT type maintained by the AMF network element is an idle state, and the state of the first terminal in the second RAT type is a connected state. For the case 2, step 580b is performed.

Step 580b: The AMF network element sends a NAS notification message to the first terminal through the access network device of the second RAT type. The first terminal receives the NAS notification message from the AMF network element through the access network device of the second RAT type. The NAS notification message includes the first identifier of the first terminal.

In a possible implementation, when the first terminal receives the NAS notification message, the first terminal obtains the first identifier of the first terminal from the NAS notification message. The first terminal determines the first identifier of the first terminal based on the stored association relationship between the first identifier of the first terminal and the first RAT type. the first terminal determines the second identifier of the first terminal corresponding to the first identifier of the first terminal, and determines the first RAT type based on a stored association relationship between the second identifier of the first terminal and the first RAT type. Further, optionally, the first terminal determines the first PDU session based on the stored association relationship between the first PDU session and the first RAT type. In step 5010, the communication connection for the first PDU session is restored through the second access network device of the first RAT type.

Step 5010: The first terminal sends a second message to the AMF network element through the second access network device corresponding to the first RAT type. The AMF network element receives the second message from the first terminal through the second access network device corresponding to the first RAT type.

The implementation process of step 5010 can refer to the description in step 4010.

It can be understood that, in the scenario of situation 2, the AMF network element may also use the solution in situation 1 to restore the communication connection of the first PDU session, without any limitation.

Via the above method, since the identifier of the first terminal is associated with the RAT type, therefore, when paging the first terminal, it is only necessary to carry the identifier of the first terminal corresponding to the RAT type in the paging message, without the need for paging enhancement. For example, avoiding carrying the indication information of the RAT type in the paging message, etc., thereby saving the overhead of the paging message.

Example 3: The difference from Example 2 lies in the following: The first terminal accesses or registers with the first AMF network element through the access network device of the first RAT type. The first AMF network element allocates an identifier of the first terminal to the first RAT type. The second terminal accesses or registers with the second AMF network element through the access network device of the second RAT type. The second AMF network element allocates an identifier of the first terminal to the second RAT type.

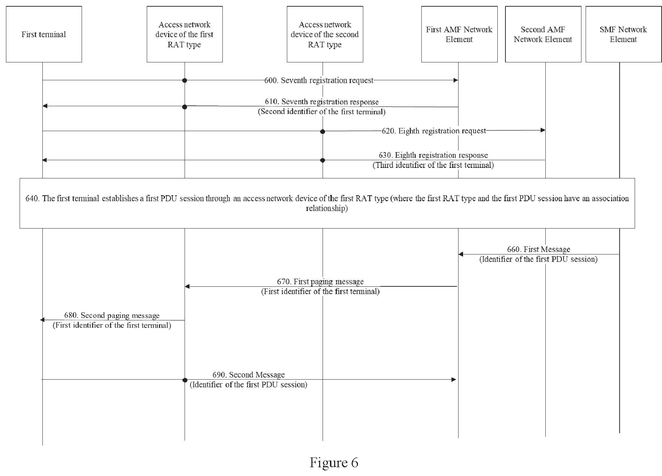

As shown in FIG. 6, a schematic flowchart is provided, comprising:
Step 600: A first terminal sends a seventh registration request to a first AMF network element through an access network device of a first RAT type. The first AMF network element receives the seventh registration request from the first terminal through the access network device of the first RAT type.
Step 610: The first AMF network element sends a seventh registration response to the first terminal through the access network device of the first RAT type. The first terminal receives the seventh registration response from the first AMF network element through the access network device of the first RAT type.

In a possible implementation, the seventh registration response includes the second identifier of the first terminal, and the second identifier of the first terminal includes the first identifier of the first terminal. The first AMF network element and the first terminal may store an association relationship between the second identifier of the first terminal and the first RAT type, or store an association relationship between the first identifier of the first terminal and the first RAT type.

Optionally, when the seventh registration request includes the information about the capability that the first terminal supports accessing the network through two access network devices, the AMF network element allocates the second identifier of the first terminal to the first RAT type. If the seventh registration request does not include the capability information that the first terminal supports accessing the network through two access network devices of a 3GPP access type, the AMF network element allocates a second identifier of the first terminal, but the second identifier of the first terminal is not associated with the first RAT type.

Optionally, when the first terminal registers with the AMF network element only through the access network device of the first RAT type, the AMF network element allocates a second identifier of the first terminal. However, the second identifier of the first terminal is not associated with the first RAT type.

Optionally, in this case, the state of the first terminal maintained by the first AMF network element in the first RAT type is a connected state.

Optionally, in this case, the state of the first terminal maintained by the first AMF network element in the first RAT type is a connected state.

Step 620: The first terminal sends an eighth registration request to the second AMF network element through the access network device of the second RAT type. The second AMF network element receives the eighth registration request from the first terminal through the access network device of the second RAT type.

It should be noted that the first terminal performs step 620 in a dual connectivity mode or in a case in which the first terminal wishes to access a network through dual connectivity.

Step 630: The second AMF network element sends an eighth registration response to the first terminal through the access network device of the second RAT type. The first terminal receives the eighth registration response from the second AMF network element through the access network device of the second RAT type.

In a possible implementation, the eighth registration response includes the third identity of the first terminal, and the third identity of the first terminal includes the fourth identity of the first terminal. The second AMF network element and the first terminal may store the association relationship between the third identifier of the first terminal and the second RAT type, or store the association relationship between the fourth identifier of the first terminal and the second RAT type.

In a possible implementation, the seventh registration request and the eighth registration request may be registration request messages. The seventh registration response and the eighth registration response may be a registration accept message.

Optionally, when the first terminal sends the registration request to the AMF network element through the access network device of the first RAT type (step 600), the AMF network element allocates a second identifier of the first terminal, but the second identifier of the first terminal is not associated with the first RAT type. When the first terminal sends the registration request to the AMF network element through the access network device of the second RAT type (step 620), the AMF network element allocates a third identifier of the first terminal to the second RAT type, and establishes an association between the second identifier of the first terminal and the first RAT type.

Optionally, at this time, the state of the first terminal maintained by the second AMF network element in the second RAT type is a connected state.

Step 660: The first terminal establishes a first PDU session through an access network device of a first RAT type.

In a possible implementation, the first AMF network element and the first terminal store an association relationship between the first RAT type and the first PDU session. Optionally, the first AMF network element may send the association relationship between the first RAT type and the first PDU session to an SMF network element, and the SMF network element stores the association relationship between the first RAT type and the first PDU session.

Step 660: When the SMF network element receives, from the UPF network element, a notification of downlink data of the first PDU session, the SMF network element sends a first message to the first AMF network element. Optionally, the first message may be an N1N2 message transfer message.

Among them, the first message includes an identifier of the first PDU session. Optionally, the first message further includes indication information of the first RAT type. Further, the first message further includes indication information of the 3GPP access type.

Step 670: The first AMF network element sends a first paging message to the first access network device of the first RAT type, and the first access network device of the first RAT type receives the first paging message from the first AMF network element, where the first paging message includes the first identifier of the first terminal. Optionally, the first paging message may be an NGAP paging message.

Step 680: The first access network device of the first RAT type sends a second paging message to the first terminal, and the first terminal receives a second paging message from the first access network device of the first RAT type, where the second paging message includes the first identifier of the first terminal.

In a possible implementation, the first terminal may obtain the first identifier of the first terminal from the second paging message. The first terminal determines the first RAT type based on a stored association relationship between the first identifier of the first terminal and the first RAT type, or a stored association relationship between the second identifier of the first terminal and the first RAT type. The first terminal may determine or select the first cell based on the first RAT type, where the RAT type corresponding to the first cell is the first RAT type. The first terminal may establish RRC with the second access network device providing the first cell. It may be understood that the RAT type of the second access network device is also the first RAT type. In step 690, the first terminal sends a second message to the first AMF network element through the second access network device of the first RAT type, to request to restore the communication connection for the first PDU session.

Step 690: The first terminal sends a second message to the first AMF network element through the second access network device corresponding to the first RAT type, and the first AMF network element receives the second message from the first terminal through the second access network device of the first RAT type, where the second message includes the identifier of the first PDU session associated with the first RAT type. The second message is used to request to restore the communication connection of the first PDU session.

It may be understood that the solution in Example 3 may be applied in Example 1. For example, the first terminal accesses the first AMF network element through an access network device of a first RAT type, and the first AMF network element allocates the first RA to the first RAT type. The first AMF network element stores the association relationship between the first RAT type and the first RA. The first terminal accesses the second AMF network element through the access network device of the second RAT type, the second AMF network element allocates the second RA to the second RAT type, and the second AMF network element stores the association relationship between the second RAT type and the second RA. When the first PDU session is associated with the first RAT type, the first AMF network element sends the first paging message or the like to the access network device of the first RA corresponding to the first RAT type.

Via the above method, the first terminal connects to different AMFs through access network devices of different RAT types. Moreover, the AMF allocates the corresponding identifier of the first terminal to the corresponding RAT type. The first terminal and the AMF may store the association relationship between the RAT type and the identifier of the first terminal. When paging the first terminal, the AMF includes the identifier of the first terminal corresponding to the RAT type in the paging message. The first terminal can determine the corresponding RAT type based on the identifier of the first terminal included in the paging message. This eliminates the need for paging enhancement, thereby saving the overhead of the paging message.

Example 4: The main difference from Example 1 lies in the fact that: one PDU session can be associated with two RAT types. For example, the first PDU session is established through an access network device of the first RAT type and an access network device of the second RAT type. In addition to being associated with the first RAT type, the first PDU session is also associated with the second RAT type.

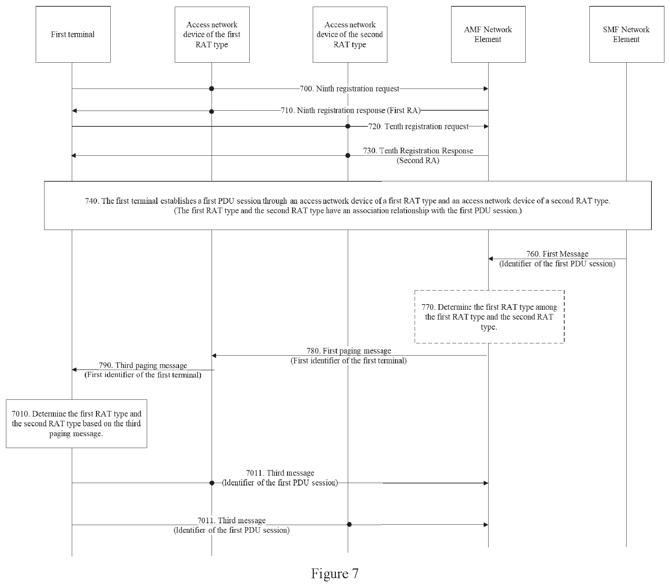

As shown in Figure 7, a schematic flowchart is provided, comprising:
Step 700: The first terminal sends a ninth registration request to the AMF network element through an access network device of a first RAT type. The AMF network element receives the ninth registration request from the first terminal through the access network device of the first RAT type.
Step 710: The AMF network element sends a ninth registration response to the first terminal through an access network device of a first RAT type. The first terminal receives the ninth registration response from the first terminal through the access network device of the first RAT type. Optionally, the ninth registration response includes the first RA corresponding to the first RAT type.

Optionally, the ninth registration request includes information about the capability of the first terminal to access a network through two access network devices. In this case, the AMF network element allocates a corresponding first RA for the first RAT type. If the ninth registration request does not include information about the capability of the first terminal to access a network through two access network devices of 3GPP access types, the AMF network element allocates a corresponding first RA for the 3GPP access type, but the first RAT type is not associated with the first RA.

Optionally, at this time, the first terminal only registers with the AMF network element through an access network device of a first RAT type. The AMF network element allocates a corresponding first RA for the 3GPP access type. However, the first RAT type is not associated with the first RA.

Optionally, at this time, the AMF network element obtains from the PCF network element or the UDM network element whether the first terminal is authorized to access a network through an access network device of two 3GPP access types. If the first terminal is authorized to access the network through the two access network devices, the AMF network element allocates a corresponding first RA for the first RAT type. If the first terminal is not authorized to access the network through the two access network devices, the AMF network element allocates a corresponding registration area for the 3GPP access type.

Optionally, at this time, the state of the first terminal maintained by the AMF network element in the first RAT type is a connected state.

Step 720: The first terminal sends a tenth registration request to the AMF network element through an access network device of a second RAT type. The AMF network element receives the tenth registration request from the first terminal through the access network device of the second RAT type.

Optionally, when the first terminal sends a registration request to the AMF network element through an access network device of a first RAT type (step 700), the AMF network element allocates a corresponding first RA for the 3GPP access type. When the first terminal subsequently sends a registration request to the AMF network element through an access network device of a second RAT type (step 720), the AMF network element allocates a corresponding second RA for the second RAT type, and simultaneously establishes an association between the first RAT type and the first RA.

It should be noted that, when the first terminal is in a dual connectivity mode, or when the first terminal wishes to access the network through dual connectivity, step 720 is performed.

Step 730: The AMF network element sends a tenth registration response to the first terminal through an access network device of a second RAT type. The first terminal receives the tenth registration response from the AMF network element through the access network device of the second RAT type. Optionally, the tenth registration response includes the second RA corresponding to the second RAT type.

In a possible implementation, the ninth registration request and the tenth registration request may be registration request messages. The ninth registration response and the tenth registration response may be registration accept messages.

Optionally, in this case, the state of the first terminal maintained by the AMF network element in the second RAT type is a connected state.

Step 740: The first terminal establishes a first PDU session through an access network device of a first RAT type and an access network device of a second RAT type.

For example, the first terminal sends, by using an access network device of a first RAT type and an access network device of a second RAT type, a PDU session establishment request message to the AMF network element. The PDU session establishment request message includes an identifier of the first PDU session. Then, the first terminal sends, through the access network device of the second RAT type, a PDU session establishment request message to the AMF network element. The PDU session establishment request message includes an identifier of the first PDU session. The first terminal stores an association relationship between the first PDU session and the first RAT type and the second RAT type.

For example, the data of the first PDU session is transmitted through an access network device of the first RAT type and an access network device of the second RAT type. The AMF network element and the first terminal store the association relationship between the first PDU session and the first RAT type and the second RAT type. Optionally, the AMF network element may further send the association relationship between the first PDU session and the first RAT type and the second RAT type to the SMF network element, and the SMF network element stores the association relationship between the first PDU session and the first RAT type and the second RAT type.

Step 760: When the SMF network element receives, from the UPF network element, a downlink data notification of the first PDU session, the SMF network element sends a first message to the AMF network element, and the AMF network element receives the first message from the SMF network element.

Optionally, the first message may be an N1N2 message transfer message. The first message includes an identifier of the first PDU session. Further, optionally, the first message further includes indication information of a 3GPP access type.

In a possible implementation, the first PDU session has an association relationship with the first RAT type and the second RAT type. The SMF network element selects the first RAT type from the first RAT type and the second RAT type, and the first message further includes indication information of the first RAT type. In this way, the AMF network element pages the first terminal through the selected access network device of the first RAT type. Optionally, for an implementation in which the SMF network element selects one RAT type from the two RAT types, refer to the description about selecting a RAT type by the AMF network element. It may be understood that, in the description of this application, an example in which the RAT type selected by the SMF network element is the first RAT type is used for description.

Step 770: The AMF network element determines a first RAT type from the first RAT type and the second RAT type.

In a possible implementation, the first PDU session has an association relationship with the first RAT type and the second RAT type. The AMF network element selects the first RAT type from the first RAT type and the second RAT type. The AMF network element pages the first terminal through the selected access network device of the RAT type. For example, the first RAT type and the second RAT type are respectively a 5G RAT and a 6G RAT. If the 5G RAT has better coverage than the 6G RAT, the AMF network element preferentially selects the 5G RAT to page the first terminal. For example, the first RAT type and the second RAT type are respectively 5G NR and satellite 5G NR. The 5G NR has a lower delay than the satellite 5G NR. Therefore, the AMF network element preferentially selects the 5G NR to page the first terminal. It may be understood that, in the description of this application, an example in which the RAT type selected by the AMF network element is the first RAT type is used for description.

In another possible implementation, the SMF network element selects one RAT type from the first RAT type and the second RAT type. The SMF network element notifies the AMF network element of the selected RAT type. For example, the first message in step 760 in the foregoing may further include indication information of the RAT type selected by the SMF. It can be learned that the AMF network element may not perform step 770, and step 770 is optional.

It can be understood that, in step 770 and the following descriptions, an example in which the RAT type selected by the AMF network element is used as the first RAT type is described. It can be understood that, the RAT type selected by the AMF network element may also be the second RAT type, and the AMF network element may page the first terminal through an access network device corresponding to the second RAT type.

In a possible implementation, when the first terminal maintained by the AMF network element is in an idle state in both the first RAT type and the second RAT type, at this time, the connection between the first terminal and the access network device of the first RAT type and the access network device of the second RAT type is all disconnected. The AMF network element performs step 780, and pages the first terminal through the access network device of the first RAT type, thereby restoring the communication connection of the first PDU session.

Step 780: The AMF network element sends a first paging message to the first access network device corresponding to the first RAT type. The first access network device corresponding to the first RAT type receives the first paging message from the AMF network element. The first paging message includes the first identifier of the first terminal. Optionally, the first paging message may be an NGAP paging message.

In a possible implementation, the AMF network element may determine the first RA based on the stored correspondence between the first RAT type and the first RA. The AMF network element determines, based on the first RA, the first access network device corresponding to the first RAT type. The first access network device is located in the first RA, and the first access network device may be one or more access network devices. Optionally, the first paging message further includes indication information for a dual connection, where the dual connection includes a connection corresponding to the first RAT type and a connection corresponding to the second RAT type. The indication information for the dual connection may be referred to as dual access indication (dual access indication). Alternatively, the first paging message further includes indication information for the first RAT type and the second RAT type.

Step 790: The first access network device corresponding to the first RAT type sends a third paging message. The first terminal receives the third paging message through the first access network device corresponding to the first RAT type. The third paging message includes the first identifier of the first terminal.

Optionally, the third paging message further includes indication information for a dual connectivity, or the third paging message further includes indication information for the first RAT type and the second RAT type. Optionally, the indication information for the dual connectivity is used to indicate that the first terminal needs to resume or establish a connection with the access network device corresponding to the first RAT type and the access network device corresponding to the second RAT type, where the connection may refer to an RRC connection. For example, when the first terminal receives the third paging message, the first terminal may learn, according to the indication information for the dual connectivity, or the indication information for the first RAT type and the second RAT type, that the first terminal needs to resume the two connections of the first RAT type and the second RAT type, or that the first terminal needs to resume the PDU session established on the access network device corresponding to the first RAT type and the access network device corresponding to the second RAT type.

In steps 780 and 790, the AMF network element pages the first terminal through the first access network device corresponding to the first RAT type. If the AMF network element does not receive a response from the first terminal, the AMF network element may continue to page the first terminal through the access network device of the second RAT type. For example, the AMF network element sends a first paging message to the access network device of the second RAT type. The access network device of the second RAT type receives the first paging message from the AMF network element. The access network device of the second RAT type then sends a third paging message to the first terminal.

Step 7010: The first terminal determines the first RAT type and the second RAT type based on the third paging message.

For example, the first terminal may determine the first RAT type and the second RAT type based on the indication information of the dual connectivity included in the third paging message. Alternatively, the first terminal may determine the first RAT type and the second RAT type based on the indication information of the first RAT type and the second RAT type included in the third paging message.

In a possible implementation, the first terminal determines the second cell based on the first RAT type, where the second cell is a cell provided by the third access network device corresponding to the first RAT type. The first terminal establishes an RRC connection to a third access network device corresponding to the first RAT type. The first terminal determines the third cell based on the second RAT type, where the third cell is a cell provided by the fourth access network device corresponding to the second RAT type. The first terminal establishes an RRC connection to a fourth access network device corresponding to the second RAT type.

In a possible implementation, the first terminal may determine the first PDU session based on the association relationship between the first PDU session and the first RAT type and the second RAT type that is stored in step 740.

Step 7011: The first terminal sends a third message to the AMF network element through the third access network device corresponding to the first RAT type and the fourth access network device corresponding to the second RAT type, where the AMF network element uses the third access network device of the first RAT type and the fourth access network device of the second RAT type. receiving a third message from the first terminal, where the third message includes the identifier of the first PDU session, and the third message is used to request to restore the communication connection of the first PDU session.

For example, the first terminal sends the third message to the AMF network element through the third access network device of the first RAT type, and the AMF network element receives the third message from the first terminal through the third access network device of the first RAT type. The first terminal sends the third message to the AMF network element through the fourth access network device of the second RAT type, and the AMF network element receives the third message from the first terminal through the fourth access network device of the second RAT type. Optionally, the third message may be a service request message. The AMF network element may request the SMF network element to restore the communication connection of the first PDU session. Specifically, restore the communication connection of the first PDU session in the first RAT type, the communication connection of the first PDU session in the second RTA type, and the like.

It may be understood that the solution of establishing one PDU session through two RAT-type access network devices in Example 4 may also be applied to Example 2 or Example 3. For example, when the solution in Example 2 is applied, the AMF network element allocates a corresponding identifier of the first terminal to the first RAT type, and the AMF network element allocates a corresponding identifier of the first terminal to the second RAT type. A difference lies in that the paging message in steps 780 and 790 may carry two identifiers of the first terminal, for example, an identifier of the first terminal corresponding to the first RAT type and an identifier of the first terminal corresponding to the second RAT type. When receiving the paging message, the first terminal may restore the communication connection of the first PDU session associated with the first RAT type and the second RAT type.

Via the above method, when a PDU session is established through two types of RAT access network devices, one of the two RAT types can be selected from the two RAT types to page the first terminal. When the first terminal receives the paging message, it can restore the communication connection of the first PDU session between the two RAT types based on the information carried in the paging message (for example, indication information for dual connectivity, etc.).

This embodiment of this application further provides a paging method, comprising: when a terminal registers with or accesses an AMF network element through two types of RAT access network devices, the AMF network element negotiates with the second terminal to determine a RAT type used to page the second terminal. The AMF network element pages the second terminal through the access network device corresponding to the negotiated RAT type.

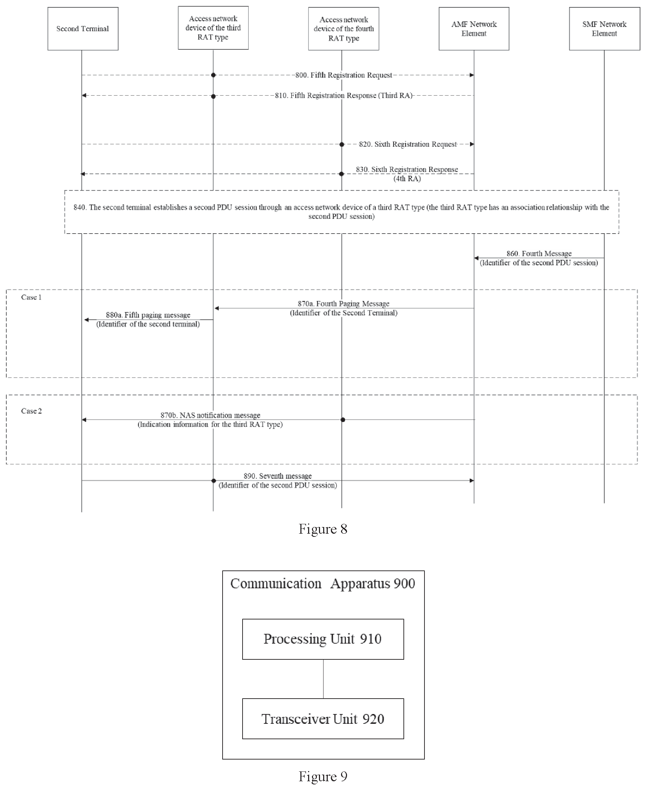

As shown in Figure 8, a flowchart is provided, comprising:
Step 800: The second terminal sends a fifth registration request to the AMF network element through the third RAT type access network device. The AMF network element receives the fifth registration request from the second terminal through the third RAT type access network device.

For example, when the AMF network element receives the fifth registration request, the AMF network element allocates a corresponding third RA to the third RAT type, and the AMF network element stores the association relationship between the third RAT type and the third RA.

Optionally, when the fifth registration request includes the information about the capability that the second terminal supports accessing the network through two access network devices, the AMF network element allocates a corresponding third RA to the third RAT type. If the fifth registration request does not include the capability information that indicates that the second terminal supports accessing the network through two access network devices of a 3GPP access type, the AMF network element allocates a corresponding third RA to the 3GPP access type, but the third RAT type is not associated with the third RA.

Optionally, when the second terminal registers with the AMF network element only through the access network device of the third RAT type, the AMF network element allocates a corresponding third RA to the 3GPP access type, but the third RAT type is not associated with the third RA.

Optionally, the AMF network element obtains, from the PCF network element or the UDM network element, whether the second terminal is authorized to access the network through two access network devices of the 3GPP access type. If the second terminal is authorized to access the network through the two access network devices, the AMF network element allocates a corresponding third RA to the third RAT type. If the second terminal is not authorized to access the network through two access network devices, the AMF network element allocates a corresponding registration area to the 3GPP access type.

Step 810: The AMF network element sends a fifth registration response to the second terminal through an access network device of the third RAT type. The second terminal receives the fifth registration response from the AMF network element through the access network device of the third RAT type. Optionally, the fifth registration response includes the third RA associated with the third RAT type.

For example, when the second terminal obtains the third RA associated with the third RAT type from the fifth registration response, the second terminal stores the association relationship between the third RAT type and the third RA.

Optionally, at this time, the state of the third RAT type of the second terminal maintained by the AMF network element is a connected state.

Step 820: The second terminal sends a sixth registration request to the AMF network element through an access network device of the fourth RAT type. The AMF network element receives the sixth registration request from the second terminal through the access network device of the fourth RAT type.

For example, when the AMF network element receives the sixth registration request, the AMF network element allocates a corresponding fourth RA to the fourth RAT type, and the AMF network element stores the association relationship between the fourth RAT type and the fourth RA.

Optionally, when the second terminal sends a registration request to the AMF network element through an access network device of a third RAT type (step 800), the AMF network element allocates a corresponding third RA for the 3GPP access type. When the second terminal further sends a registration request to the AMF network element through an access network device of a fourth RAT type (step 820), the AMF network element allocates a corresponding fourth RA for the fourth RAT type, and simultaneously establishes an association between the third RAT type and the third RA.

It should be noted that, when the second terminal is in a dual connectivity mode, or when the second terminal wishes to access the network through dual connectivity, step 820 is performed.

Step 830: The AMF network element sends a sixth registration response to the second terminal through an access network device of a fourth RAT type. The second terminal receives the sixth registration response from the AMF network element through the access network device of the fourth RAT type. Optionally, the sixth registration response includes the fourth RA associated with the fourth RAT type.

For example, the second terminal obtains, in the sixth registration response, the fourth RA associated with the fourth RAT type, and the second terminal stores the association relationship between the fourth RAT type and the fourth RA.

Optionally, the fifth registration request and the sixth registration request may be registration request messages. The fifth registration response and the sixth registration response may be a registration accept message.

Optionally, in this case, the status that is of the second terminal in the fourth RAT type and that is maintained by the AMF network element is the connected mode.

In a possible implementation, the AMF network element and the second terminal may negotiate a target RAT type used to page the second terminal, that is, the target RAT type is used to page the second terminal. The target RAT type is the third RAT type or the fourth RAT type.

In a possible implementation, the target RAT type is determined by the second terminal. For example, the second terminal sends a fifth message to the AMF network element, and the AMF network element receives the fifth message from the second terminal, where the fifth message includes the indication information of the target RAT type. Optionally, the fifth message may be a fifth registration request or a sixth registration request of the second terminal. For example, the fifth registration request or the sixth registration request may include indication information of the target RAT type.

In another possible implementation, the target RAT type is determined by the AMF network element. For example, the AMF network element sends a sixth message to the second terminal, and the second terminal receives the sixth message from the AMF network element, where the sixth message includes the indication information of the target RAT type. Optionally, the sixth message may be a fifth registration response or a sixth registration response of the second terminal. For example, the fifth registration response or the sixth registration response includes indication information of the target RAT type.

In another possible implementation, the target RAT type is requested by the second terminal and determined by the AMF network element. For example, the second terminal sends a fifth message to the AMF network element, and the AMF network element receives the fifth message from the second terminal. The fifth message includes the indication information of the target RAT type requested by the second terminal. Optionally, the fifth message may be a fifth registration request or a sixth registration request of the second terminal. The AMF network element sends a sixth message to the second terminal, and the second terminal receives the sixth message from the AMF network element, where the sixth message includes the indication information of the determined target RAT type. Optionally, the sixth message may be a fifth registration response or a sixth registration response of the second terminal. The indication information that is of the target RAT type and that is requested by the second terminal may be the same as or different from the indication information that is of the target RAT type and that is determined by the AMF network element.

Step 840: The second terminal establishes a second session through the access network device of the third RAT type.

Optionally, the second session may be a second PDU session. In the following description and the schematic flowchart in FIG. 8, the second PDU session is used as an example for description. For example, the second PDU session is associated with the third RAT type. The AMF network element and the second terminal may store the association relationship between the second PDU session and the third RAT type. Optionally, the AMF network element may send the association relationship between the second PDU session and the third RAT type to the SMF network element. The SMF network element stores the association relationship between the second PDU session and the third RAT type.

Steps 800 to 840 are optional.

Step 860: When the SMF network element receives the downlink data notification of the second PDU session from the UPF network element, the SMF network element sends a fourth message to the AMF network element, and the AMF network element receives the fourth message from the SMF network element.

The fourth message includes the identifier of the second PDU session. Optionally, the fourth message further includes indication information of a third RAT type. Further, optionally, the fourth message further includes indication information of the 3GPP access type. The second terminal registers with (or connects to) the AMF network element through the access network device of the third RAT type and the access network device of the fourth RAT type. The second PDU session is associated with the third RAT type. For example, the second terminal establishes the second PDU session through an access network device corresponding to the third RAT type, or the second PDU session is established on an access network device of the third RAT type. Optionally, the fourth message may be an N1N2 message transfer message.

In a possible implementation, the AMF network element may maintain the state of the second terminal in the third RAT type and the state corresponding to the fourth RAT type. For example, in step 840, the connection between the second terminal and the access network device of the third RAT type is disconnected. Therefore, the state maintained by the AMF network element for the second terminal is

In this example of this application, the state of the second terminal in the third RAT type is an idle state. The second PDU session is established by the access network device corresponding to the third RAT type. Therefore, the communication of the second PDU session of the second terminal is interrupted. At this time, it is necessary to restore the communication connection of the second PDU session, so as to achieve the transmission of the corresponding downlink data through the second PDU session. The state of the second terminal in the fourth RAT type, which is maintained by the AMF network element, may be a connected state or an idle state.

In this example of this application, the following steps 870a, 880a, and 890 may be directly performed. Alternatively, when certain conditions are met, the following steps 870a, 880a, and 890 may be performed. In the following description, for example, when the condition of situation 1 is met, steps 870a, 880a, and 890 are performed.

Scenario 1: The second terminal is disconnected from both the access network device of the third RAT type and the access network device of the fourth RAT type. Optionally, at this time, the AMF network element maintains that the second terminal is in an idle state for both the third RAT type and the fourth RAT type. For Scenario 1, steps 870a and 880a are performed.

In a possible implementation, since the second PDU session is established through the access network device of the third RAT type, the second PDU session is established. When the second terminal is disconnected from the access network device of the third RAT type, the communication of the second PDU session is also interrupted. In step 870a, the AMF network element pings the second terminal through the target access network device corresponding to the negotiated target RAT type, thereby restoring or establishing a connection between the second terminal and the access network device of the third RAT type, and thereby restoring the communication connection of the second PDU session.

Step 870a: The AMF network element sends a fourth paging message to the target access network device corresponding to the target RAT type, where the target access network device corresponding to the target RAT type receives the fourth paging message from the AMF network element, and the fourth paging message includes an identifier of the second terminal.

In a possible implementation, the target access network device is in the RA corresponding to the target RAT type. For example, when the target RAT type is the third RAT type, the target access network device is in the third RA corresponding to the third RAT type. Alternatively, when the target RAT type is the fourth RAT type, the target access network device is in the fourth RA corresponding to the fourth RAT type. Optionally, the fourth paging message may be an NGAP paging message.

In a possible implementation, when the AMF network element receives the fourth message, the AMF network element obtains the identifier of the second PDU session from the fourth message. The AMF network element determines the third RAT type based on the stored association relationship between the second PDU session and the third RAT type. When the target RAT type negotiated between the AMF network element and the second terminal is the third RAT type, the AMF network element sends the fourth paging message to the access network device of the third RAT type. In step 880a, the access network device of the third RAT type sends the fifth paging message, and the second terminal receives the fifth paging message. Alternatively, when the target RAT type negotiated between the AMF network element and the second terminal is the fourth RAT type, the AMF network element sends the fourth paging message to the access network device of the fourth RAT type, and the fourth paging message further includes the indication information of the third RAT type. In step 880a, the access network device of the fourth RAT type sends the fifth paging message, and the fifth paging message further includes the indication information of the third RAT type. The second terminal receives the fifth paging message, and the second terminal restores the RRC connection with the access network device of the third RAT type based on the indication information of the third RAT type included in the fifth paging message. Further, the second terminal requests to restore the communication connection of the second PDU session associated with the third RAT type.

Step 880a: The target access network device corresponding to the target RAT type sends a fifth paging message, and the second terminal receives the fifth paging message through the target access network device corresponding to the target RAT type, where the fifth paging message includes the identity of the second terminal.

Optionally, the second terminal may receive the fifth paging message based on the target RAT type. For example, radio resources used by different RAT types to transmit paging messages are different. The third RAT type is corresponding to the third radio resource, and the fourth RAT type is corresponding to the fourth radio resource. When the target RAT type negotiated by the AMF network element and the second terminal is the third RAT type, the second terminal receives the fifth paging message on the third radio resource. when the target RAT type negotiated by the AMF network element and the second terminal is the fourth RAT type, the second terminal receives the fifth paging message on the fourth radio resource.

In a possible implementation, when the target RAT type is the third RAT type, and the second terminal receives the fifth paging message through the access network device corresponding to the third RAT type, the second terminal determines the second PDU session based on the stored association relationship between the second PDU session and the third RAT type. The second terminal requests, through step 890, to restore the communication connection for the second PDU session.

In another possible implementation, when the target RAT type is the fourth RAT type, the second terminal receives the fifth paging message through the access network device corresponding to the fourth RAT type. The fifth paging message further includes indication information for the third RAT type. The second terminal determines the third RAT type based on the indication information for the third RAT type included in the fifth paging message. The second terminal determines the second PDU session based on the stored indication information for the second PDU session and the third RAT type. The second terminal, through step 890, requests to restore the communication connection of the second PDU session.

Case 2: The second terminal is disconnected from the access network device of the third RAT type, but the second terminal maintains a connection with the access network device of the fourth RAT type. Optionally, at this time, the state of the second terminal maintained by the AMF network element in the third RAT type is an idle state, and the state of the second terminal maintained by the AMF network element in the fourth RAT type is a connected state. For Case 2, step 870b is performed.

Step 870b: The AMF network element sends a NAS notification message to the second terminal through an access network device of the fourth RAT type. The second terminal receives, through the access network device of the fourth RAT type, the NAS notification message from the AMF network element. The NAS notification message includes indication information of the fourth RAT type.

It can be understood that, in the scenario of case 2, the AMF network element may also use the solution in case 1 (for example, step 870a and step 880a) to page the second terminal. There is no limitation in this regard.

It can be understood that, in the procedure of FIG. 8, the second PDU session is set to have an association relationship with the third RAT type. If the second PDU session has an association relationship with the fourth RAT type, there is a case 3: When the second terminal is disconnected from the access network device of the fourth RAT type, and the second terminal maintains a connection with the access network device of the third RAT type, the AMF network element may send a NAS notification message to the second terminal through the access network device of the third RAT type. The second terminal may receive, through the access network device of the third RAT type, the NAS notification message from the AMF network element. The NAS notification message includes indication information of the fourth RAT type.

Step 890: The second terminal sends a seventh message to the AMF network element through an access network device corresponding to the third RAT type. The seventh message includes an identifier of a second PDU session corresponding to the third RAT type. The seventh message is used to request to restore the communication connection of the second PDU session.

In a possible implementation, in the flowchart of FIG. 8, before the second terminal sends a seventh message to the AMF network element through an access network device corresponding to the third RAT type, the second terminal restores the RRC connection with the access network device corresponding to the third RAT type. For example, the second terminal determines a fourth cell based on the third RAT type, where the fourth cell is a cell provided by the access network device corresponding to the third RAT type. The second terminal restores the RRC connection with the access network device corresponding to the third RAT type. Optionally, the seventh message may be a service request message.

It can be understood that, in the flowchart of FIG. 8, before the second terminal sends a seventh message to the AMF network element through an access network device corresponding to the third RAT type, the flowchart is drawn with an example in which the target RAT type negotiated between the AMF network element and the second terminal is the third RAT type.

According to the foregoing method, the AMF network element negotiates with the second terminal a RAT type used to page the second terminal, and the second terminal listens to the paging message in the negotiated RAT type, thereby reducing listening energy consumption of the terminal. "Listen" can be understood as receiving. For example, if the AMF network element negotiates with the second terminal to page the second terminal in the third RAT type, the AMF network element sends a fourth paging message to the access network device of the third RAT type, and the access network device of the third RAT type sends a fifth paging message to the second terminal. The second terminal listens to the paging message under the access network device of the third RAT type, and listens to the paging message only in a specific RAT type, thereby reducing listening energy consumption of the terminal.

It may be understood that, in this embodiment of this application,
1. In addition to the differences between different processes, the description of different processes can be referenced by each other.
2. In each process, the sequence of different steps is not limited. In addition, each process may include fewer steps or more steps than the flowchart or text description.
3. In the processes of Figures 3 to 8, the descriptions are provided with the terminal, access network device, AMF network element, or SMF network element as the executing entity as an example. It can be understood that in each process, the functions of the terminal can be implemented by the terminal itself, or by a module (such as a chip or circuit, etc.) within the terminal. The functions of the access network device can be implemented by the access network device itself, or by a module (such as a chip or circuit, etc.) within the access network device, or by a logical node, logical module, or software that can fully or partially implement the functions of the access network device. The functions of the AMF network element or the SMF network element can be implemented by the AMF network element or the SMF network element itself, or by a module (such as a chip or circuit, etc.) within the AMF network element or the SMF network element.
4. In the embodiments of this application, "receiving, by (for example, a terminal), information from (for example, an access network device)" may be understood as that the source end of the information is the access network device, and the destination end is the terminal. It may include information that the terminal directly or indirectly receives from the access network device. The information may be subject to necessary processing between the source end and the destination end of the information, for example, format change. However, the destination end can understand the valid information from the source end. Similar expressions in this application can be understood in a similar manner, and details are not described herein again.

In the embodiments of this application provided above, the methods provided in the embodiments of this application are described from the perspective of interaction between the terminal, the access network device, the AMF network element, and the SMF network element. In order to implement the functions in the method provided in the embodiments of this application, the terminal, the access network device, the AMF network element, or the SMF network element, etc., may include a hardware structure and/or a software module, to implement the foregoing functions in the form of a hardware structure, a software module, or a hardware structure plus a software module. Whether a specific function in the foregoing functions is executed in the form of a hardware structure, a software module, or a hardware structure plus a software module, depends on the design constraints of the specific application of the technical solution.

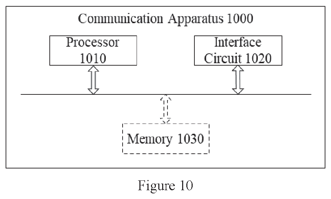

FIG. 9 and FIG. 10 are schematic structural diagrams of possible communication apparatuses according to embodiments of this application. These communication apparatuses may implement one or more corresponding functions in the foregoing method embodiments. For example, functions implemented by the AMF network element or the terminal, and therefore, the beneficial effects of the foregoing method embodiments may be achieved. In the embodiments of this application, the communication apparatus may be the terminal 100 shown in FIG. 1, the access network device in the RAN 200, the AMF network element in the core network 300, or a module (for example, a chip) applied to the terminal, the access network device, or the AMF network element.

As shown in Figure 9, the communication apparatus 900 includes a processing unit 910 and a transceiver unit 920. The communication apparatus 900 is configured to implement the functions of the AMF network element or the terminal in any one of the method embodiments shown in Figures 3 to 8.

Optionally, the transceiver unit 920 may also be referred to as an output unit, an interface unit, a communication unit, or the like. In a possible implementation, the transceiver unit 920 includes at least one of a sending unit or a receiving unit. The sending unit and the receiving unit may be integrated together, or may be two independent units, or the like.

When the communication apparatus 900 is configured to implement the functions of the AMF network element in FIG. 3 to FIG. 7, specifically:
The transceiver unit 920 is configured to receive a first message from a session management function network element, wherein the first message comprises an identifier of a first session of a first terminal, wherein the first session is associated with a first radio access technology type, and wherein the first terminal registers with the access and mobility management function network element via an access network device of the first radio access technology type and an access network device of a second radio access technology type.

In a possible design, the first access network device is located in a first registration area corresponding to the first radio access technology type.

In a possible design, the transceiver unit 920 is further configured to receive a first registration request from the first terminal, where the first registration request is received by an access network device of the first radio access technology type. The transceiver unit 920 is further configured to send a first registration response to the first terminal, where the first registration response includes the first registration area corresponding to the first radio access technology type.

In a possible design, the processing unit 910 is further configured to store an association relationship between the first radio access technology type and the first registration area.

In a possible design, the transceiver unit 920 is further configured to receive a second registration request from the first terminal, where the second registration request is received by an access network device of the second radio access technology type. The transceiver unit 920 is further configured to send a second registration response to the first terminal, where the second registration response includes the second registration area corresponding to the second radio access technology type.

In a possible design, the processing unit 910 is further configured to store an association relationship between the second radio access technology type and the second registration area.

In a possible design, the processing unit 910 is further configured to determine, based on the first radio access technology type, a first identifier of the first terminal.

In a possible design, the transceiver unit 920 is further configured to receive a third registration request from the first terminal, where the third registration request is received by an access network device of the first radio access technology type. The transceiver unit 920 is further configured to send a third registration response to the first terminal, where the third registration response includes a second identifier of the first terminal corresponding to the first radio access technology type, and the second identifier includes the first identifier.

In a possible design, the processing unit 910 is further configured to store an association relationship between the second identifier and the first radio access technology type, or store an association relationship between the first identifier and the first radio access technology type.

In a possible design, the transceiver unit 920 is further configured to receive a fourth registration request from the first terminal, where the fourth registration request is received through an access network device of the second radio access technology type. The transceiver unit 920 is further configured to send a fourth registration response to the first terminal, where the fourth registration response includes a third identifier of the first terminal corresponding to the second radio access technology type, and the third identifier includes a fourth identifier of the first terminal.

In a possible design, the processing unit 910 is further configured to store the association relationship between the third identifier and the second radio access technology type, or store the association relationship between the fourth identifier and the second radio access technology type.

In a possible design, the first terminal is in an idle state when the connection state corresponding to the first radio access technology type is an idle state.

In a possible design, the processing unit 910 is further configured to determine, based on the association relationship between the session and the radio access technology type, the first radio access technology type associated with the first session.

In a possible design, the first paging message further includes indication information of the first radio access technology type.

In a possible design, the first session is further associated with a second radio access technology type, and the processing unit 910 is further configured to determine the first radio access technology type from the first radio access technology type and the second radio access technology type.

In a possible design, the first paging message further includes indication information of dual connectivity, and the dual connectivity includes a connection corresponding to the first radio access technology type and the second radio access technology type; or the first paging message further includes indication information of the first radio access technology type and the second radio access technology type.

When the communications apparatus 900 is configured to implement functions of the terminals in FIG. 4, FIG. 5, and FIG. 6, specifically:
a transceiver unit 920, configured to receive a second paging message, where the second paging message is received through a first access network device corresponding to a first radio access technology type, and the second paging message includes a first identifier of the first terminal; and registering, by the first terminal, with an access and mobility management function network element through the access network device of the first radio access technology type and the access network device of the second radio access technology type; and; a processing unit 910, configured to determine the first radio access technology type based on the second paging message or the first identifier; and; The transceiver unit 920 is further configured to send a second message to the access and mobility management function network element through a second access network device corresponding to the first radio access technology type, where the second message includes an identifier of a first session associated with the first radio access technology type. the second message is used to request to restore the communication connection of the first session.

In a possible design, the first access network device is in a first registration area corresponding to the first radio access technology type.

In a possible design, the transceiver unit 920 is further configured to send a first registration request to the access and mobility management function network element, where the first registration request is sent through the access network device of the first radio access technology type. The transceiver unit 920 is further configured to receive a first registration response from the access and mobility management function network element, where the first registration response includes the first registration area corresponding to the first radio access technology type.

In a possible design, the processing unit 910 is further configured to store the association relationship between the first radio access technology type and the first registration area.

In a possible design, the transceiver unit 920 is further configured to send a second registration request to the access and mobility management function network element, where the second registration request is sent through the access network device of the second radio access technology type; and; The transceiver unit 920 is further configured to receive a second registration response from the access and mobility management function network element, where the second registration response includes the second registration area of the second radio access technology type.

In a possible design, the processing unit 910 is further configured to store the association relationship between the second radio access technology type and the second registration area.

In a possible design, the determining, by the processing unit 910, the first radio access technology type based on the second paging message includes: determining the first radio access technology type based on indication information that is of the first radio access technology type and that is included in the second paging message; and; determining the first radio access technology type based on a radio resource used for receiving the second paging message.

In a possible design, the transceiver unit 920 is further configured to send a third registration request to the access and mobility management function network element, where the third registration request is sent through the access network device of the first radio access technology type; and; The transceiver unit 920 is further configured to receive a third registration response from the access and mobility management function network element, where the third registration response includes a second identifier of the first terminal of the first radio access technology type, and the second identifier includes the first identifier.

In a possible design, the processing unit 910 is further configured to store an association relationship between the second identifier and the type of the first radio access technology, or store an association relationship between the first identifier and the type of the first radio access technology.

In a possible design, the transceiver unit 920 is further configured to send a fourth registration request to the access and mobility management function network element, wherein the fourth registration request is sent by an access network device of the type of the second radio access technology. The transceiver unit 920 is further configured to receive a fourth registration response from the access and mobility management function network element, wherein the fourth registration response includes a third identifier of a first terminal of the type of the second radio access technology, and the third identifier includes a fourth identifier of the first terminal.

In a possible design, the processing unit 910 is further configured to store an association relationship between the third identifier and the type of the second radio access technology, or store an association relationship between the fourth identifier and the type of the second radio access technology.

In a possible design, the processing unit 910 is further configured to determine a first cell based on the first radio access technology type, where the first cell is a cell provided by the second access network device.

In a possible design, the connection status corresponding to the first radio access technology type of the first terminal is an idle state.

When the communications apparatus 900 is configured to implement the function of the terminal in the procedure in FIG. 7, specifically:
a transceiver unit 920, configured to receive a third paging message, where the third paging message is received through a first access network device corresponding to a first radio access technology type, and the third paging message includes a first identifier of the first terminal; and registering, by the first terminal, with an access and mobility management function network element through the access network device of the first radio access technology type and the access network device of the second radio access technology type; and; a processing unit 910, configured to determine the first radio access technology type and the second radio access technology type based on the third paging message; and; The transceiver unit 920 is further configured to send a third message to the access and mobility management function network element through the third access network device corresponding to the first radio access technology type and the fourth access network device corresponding to the second radio access technology type. the third message comprises an identifier of a first session associated with the first radio access technology type and the second radio access technology type, and the third message is used to request to restore a communication connection of the first session.

In a possible design, the third paging message further includes indication information of dual connectivity, and the dual connectivity includes a connection corresponding to the first radio access technology type and the second radio access technology type; or the third paging message further includes indication information of the first radio access technology type and the second radio access technology type.

In a possible design, the processing unit 910 is further configured to determine a second cell based on the first radio access technology type, where the second cell is a cell provided by a third access network device corresponding to the first radio access technology type; and; determining a third cell based on the second radio access technology type, wherein the third cell is a cell provided by a fourth access network device corresponding to the second radio access technology type.

In a possible design, the connection status corresponding to the first radio access technology type of the first terminal is an idle state.

When the communications apparatus 900 is configured to implement a function of the AMF network element in FIG. 8, specifically:
The transceiver unit 920 is configured to receive a fourth message from a session management function network element, wherein the fourth message includes an identifier of a second session of a second terminal, the second session is associated with a third radio access technology type, and the second terminal registers with the access and mobility management function network element through an access network device of the third radio access technology type and an access network device of a fourth radio access technology type. The processing unit 910 is configured to generate a fourth paging message. The transceiver unit 920 is further configured to send the fourth paging message to a target access network device corresponding to the target radio access technology type, wherein the fourth paging message includes the identifier of the second terminal, the target radio access technology type is determined by the second terminal or the access and mobility management function network element, and the target radio access technology type is the third radio access technology type or the fourth radio access technology type.

In a possible design, the target access network device is in a registration area corresponding to the target radio access technology type.

In a possible design, the target radio access technology type is the third radio access technology type. The transceiver unit 920 is further configured to receive a fifth registration request from the second terminal, wherein the fifth registration request is received by an access network device of the third radio access technology type. The transceiver unit 920 is further configured to send a fifth registration response to the second terminal, wherein the fifth registration response includes a third registration area associated with the third radio access technology type.

In a possible design, the processing unit 910 is further configured to store the association relationship between the third radio access technology type and the third registration area.

In a possible design, the target radio access technology type is the fourth radio access technology type. The transceiver unit 920 is further configured to receive a sixth registration request from the second terminal, wherein the sixth registration request is received by an access network device of the fourth radio access technology type. The transceiver unit 920 is further configured to send a sixth registration response to the second terminal, wherein the sixth registration response includes a fourth registration area associated with the fourth radio access technology type.

In a possible design, the processing unit 910 is further configured to store an association relationship between the fourth radio access technology type and the fourth registration area.

In a possible design, the target radio access technology type is determined by the second terminal. The transceiver unit 920 is further configured to receive a fifth message from the second terminal, wherein the fifth message includes indication information for the target radio access technology type.

In a possible design, the target radio access technology type is determined by the access and mobility management function network element. The transceiver unit 920 is further configured to receive a sixth message from the second terminal, wherein the sixth message includes indication information for the target radio access technology type.

In a possible design, the target radio access technology type is the fourth radio access technology type, and the fourth paging message further includes indication information for the third radio access technology type.

In a possible design, the target radio access technology type is the fourth radio access technology type, and the fourth paging message further includes indication information for the third radio access technology type.

When the communication apparatus 900 is configured to implement the functions of the terminal in the procedure of FIG. 8, specifically:
The transceiver unit 920 is configured to receive a fifth paging message, wherein the fifth paging message is received by a target access network device corresponding to a target radio access technology type, and the fifth paging message includes an identifier of the second terminal. The target radio access technology type is determined by the second terminal or the access and mobility management function network element. The second terminal registers with the access and mobility management function network element through an access network device corresponding to the third radio access technology type and an access network device corresponding to the fourth radio access technology type. The target radio access technology type is the third radio access technology type or the fourth radio access technology type. In the case where the target radio access technology type is the fourth radio access technology type, the fifth paging message further includes indication information for the third radio access technology type. The processing unit 910 is configured to generate a seventh message. The transceiver unit 920 is further configured to send the seventh message to the access and mobility management function network element through the access network device corresponding to the third radio access technology type, wherein the seventh message includes an identifier of a second session corresponding to the third radio access technology type, and the seventh message is used to request to resume the communication connection of the second session.

In a possible design, when receiving the fifth paging message, the transceiver unit 920 specifically performs the following: The processing unit 910 controls the transceiver unit 920 to receive the fifth paging message based on the target radio access technology type.

In a possible design, the target access network device is located in a registration area corresponding to the target radio access technology type.

In a possible design, the transceiver unit 920 is further configured to receive a fifth registration request from the access and mobility management function network element, wherein the fifth registration request is sent by an access network device of the third radio access technology type. The transceiver unit 920 is further configured to send a fifth registration request to the access and mobility management function network element, wherein the fifth registration request is sent by an access network device of the third radio access technology type. The transceiver unit 920 is further configured to receive a fifth registration response from the access and mobility management function network element, wherein the fifth registration response includes the third registration area associated with the third radio access technology type. The transceiver unit 920 is further configured to receive a fifth registration response from the access and mobility management function network element, wherein the fifth registration response includes the third registration area associated with the third radio access technology type.

In a possible design, the processing unit 910 is further configured to store the association relationship between the third radio access technology type and the third registration area.

In a possible design, the target radio access technology type is the fourth radio access technology type. The transceiver unit 920 is further configured to send a sixth registration request to the access and mobility management function network element. The sixth registration request is sent by an access network device of the fourth radio access technology type. The transceiver unit 920 is further configured to receive a sixth registration response from the access and mobility management function network element. The sixth registration response includes the indication information of the fourth registration area associated with the fourth radio access technology type.

In a possible design, the processing unit 910 is further configured to store an association relationship between the fourth radio access technology type and the fourth registration area.

In a possible design, the transceiver unit 920 is further configured to send a fifth message to the access and mobility management function network element. The fifth message includes indication information of the fourth registration area associated with the target radio access technology type.

In a possible design, the target radio access technology type is determined by the access and mobility management function network element, and the transceiver unit 920 is further configured to receive a sixth message from the access and mobility management function network element, where the sixth message includes indication information of the target radio access technology type.

In a possible design, the processing unit 910 is further configured to determine a fourth cell based on the third radio access technology type, where the fourth cell is a cell provided by an access network device corresponding to the third radio access technology type.

In a possible design, the state corresponding to the third radio access technology type of the second terminal is an idle state.

For more detailed descriptions about the processing unit 910 and the transceiver unit 920, refer to descriptions in FIG. 3 to FIG. 8 in the foregoing method embodiment. Details are not described herein again.

It may be understood that unit division in this embodiment of this application is an example, and is merely logical function division. In actual implementation, there may be another division manner. In addition, functional units in this embodiment of this application may be integrated into one physical device (for example, a processor), or each functional unit may be an independent physical device, or two or more units may be integrated into one unit for implementation. The integrated unit may be implemented in a form of hardware, or implemented in a form of a software function module, or the like.

As shown in FIG. 10, a communications apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communications apparatus 1000 may further include a memory 1030, configured to store an instruction executed by the processor 1010, store input data required by the processor 1010 to run the instruction, or store data generated after the processor 1010 runs the instruction.

When the communications apparatus 1000 is configured to implement the methods shown in FIG. 3 to FIG. 8, the processor 1010 is configured to implement a function of the processing unit 910, and the interface circuit 1020 is configured to implement a function of the transceiver unit 920.

When the foregoing communications apparatus is a chip applied to a terminal, the chip implements functions of the terminal in the foregoing method embodiment. receiving, by the chip through another module (such as a radio frequency module or an antenna) in the terminal, information sent by the access network device to the terminal; and; Alternatively, the chip sends information to another module (such as a radio frequency module or an antenna) in the terminal, where the information is sent by the terminal to the access network device.

When the aforementioned communication apparatus is a module applied to an AMF network element, the module implements the functions of the AMF network element in the method embodiments. The module receives information from other modules (such as a radio frequency module or an antenna) in the AMF network element. This information is sent by the terminal to the AMF network element. Alternatively, the module sends information to other modules (such as a radio frequency module or an antenna) in the AMF network element. This information is sent by the AMF network element to the terminal.

It can be understood that, in the embodiments of this application, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The general-purpose processor may be a microprocessor, or may be any conventional processor.

The memory in this embodiment of this application may be a random access memory (random access memory, RAM), a flash memory, a read-only memory (read-only memory, ROM), or a programmable read-only memory (programmable ROM, PROM), erasable programmable read-only memory (erasable PROM, EPROM), electrically erasable programmable read-only memory (electrically EPROM, EEPROM), register, hard disk, removable hard disk, CD-ROM, or any other form of storage medium well known in the art.

The method steps in the embodiments of this application may be implemented in hardware, or may be implemented in a software instruction executable by a processor. The software instruction may be formed by a corresponding software module, and the software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or the present in any other form of storage medium well known in the art. An exemplary storage medium is coupled to the processor, so that the processor can read information from the storage medium and can write information to the storage medium. Alternatively, the storage medium may be a component of the processor. The processor and the storage medium may be located in the ASIC.

An embodiment of this application further provides a communications apparatus. The communications apparatus includes a processor and a memory. The processor and the memory are coupled. The processor is configured to implement functions of the AMF network element or the terminal in FIG. 3 to FIG. 8.

An embodiment of this application further provides a communications apparatus, comprising a processor. The processor is configured to implement functions of the AMF network element or the terminal in FIG. 3 to FIG. 8.

An embodiment of this application further provides a computer readable storage medium. The computer readable storage medium stores an instruction, and the instruction may also be referred to as a computer program, computer program code, or the like. The instruction runs on a computer, so that the computer performs functions of the AMF network element or the terminal in FIG. 3 to FIG. 8 in the foregoing method embodiments.

An embodiment of this application further provides a computer program product, comprising a computer program or an instruction. When the computer program or the instruction runs on a computer, the method of the AMF network element or the terminal in FIG. 3 to FIG. 8 is implemented.

An embodiment of this application further provides a chip. The chip includes a processor, the processor is coupled to a memory, and the processor is configured to execute a computer program or an instruction stored in the memory, so as to implement functions of the AMF network element or the terminal in FIG. 3 to FIG. 8.

An embodiment of this application further provides a communications system, comprising a first communications apparatus and a second communications apparatus. The first communications apparatus and the second communications apparatus may be separately configured to implement functions of the AMF network element and the terminal in FIG. 3 to FIG. 8. Further, the terminal device further includes a third communications apparatus, configured to implement functions of the access network device in FIG. 3 to FIG. 8.

All or some of the foregoing embodiments may be implemented through software, hardware, firmware, or any combination thereof. When implemented through software, all or some of the applications may be implemented in a form of a computer program product. The computer program product includes one or more computer programs or instructions. When the computer program or instruction is loaded and executed on a computer, all or some of the procedures or functions in the embodiments of this application are performed. The computer may be a general-purpose computer, a dedicated computer, a computer network, a network device, user equipment, or another programmable apparatus. The computer program or instruction may be stored in a computer readable storage medium, or transmitted from one computer readable storage medium to another computer readable storage medium. For example, The computer program or instruction may be transmitted from one website site, computer, server, or data center to another website site, computer, server, or data center, in a wired or wireless manner. The computer readable storage medium may be any usable medium accessible by a computer, or a data storage device such as a server or a data center that integrates one or more usable media. The usable medium may be a magnetic medium, for example, a floppy disk, a hard disk, or a magnetic tape. It may also be an optical medium, for example, a digital video disc; It may also be a semiconductor medium, for example, a solid state disk. The computer-readable storage medium may be a volatile or non-volatile storage medium, or may include two types of storage mediums: volatile and non-volatile.

In the embodiments of this application, unless otherwise specified and logically conflicted, terms and/or descriptions in different embodiments are consistent and may be referenced by each other. Technical features in different embodiments may be combined to form a new embodiment based on internal logical relationships of the different embodiments.

## Claims

1. A paging method, wherein the method is applied to an access and mobility management function network element and comprises:
receiving a first message from a session management function network element, wherein the first message comprises an identifier of a first session of a first terminal, and the first session is associated with a first radio access technology type; and registering, by the first terminal, with the access and mobility management function network element through the access network device of the first radio access technology type and the access network device of the second radio access technology type; and
sending a first paging message to a first access network device corresponding to the first radio access technology type, wherein the first paging message comprises a first identifier of the first terminal.

2. The method according to claim 1, wherein the first access network device is located in a first registration area corresponding to the first radio access technology type.

3. The method according to claim 1, wherein the method further comprises:
based on the first radio access technology type, determining the first identifier of the first terminal.

4. The method according to claim 3, wherein the method further comprises:
receiving a third registration request from the first terminal, wherein the third registration request is received by an access network device of the first radio access technology type;
sending a third registration response to the first terminal, wherein the third registration response comprises a second identifier of the first terminal corresponding to the first radio access technology type, and the second identifier comprises the first identifier.

5. The method according to claim 4, wherein the method further comprises:
storing an association relationship between the second identifier and the first radio access technology type, or storing an association relationship between the first identifier and the first radio access technology type.

6. The method according to any one of claims 1 to 5, wherein the connection status of the first terminal corresponding to the first radio access technology type is an idle state.

7. The method according to any one of claims 1 to 6, wherein the method further comprises:
based on an association relationship between the session and the type of radio access technology, determining the first radio access technology type associated with the first session.

8. The method according to claim 7, wherein the first paging message further comprises indication information for the first radio access technology type.

9. The method according to any one of claims 1 to 8, wherein the first session is further associated with a second radio access technology type, and the method further comprises:
from the first radio access technology type and the second radio access technology type, determining the first radio access technology type.

10. The method according to claim 9, wherein the first paging message further comprises indication information for a dual connectivity, wherein the dual connectivity comprises a connection corresponding to the first radio access technology type and the second radio access technology type, or, the first paging message further comprises indication information for the first radio access technology type and the second radio access technology type.

11. A paging method, wherein the method is applied to an access and mobility management function network element, and comprises:
receiving a fourth message from a session management function network element, wherein the fourth message includes an identifier of a second session of a second terminal, the second session is associated with a third radio access technology type, and the second terminal registers with the access and mobility management function network element through an access network device of the third radio access technology type and an access network device of a fourth radio access technology type;
sending a fourth paging message to a target access network device corresponding to the target radio access technology type, wherein the fourth paging message comprises an identifier of the second terminal, the target radio access technology type is determined by the second terminal or the access and mobility management function network element, and the target radio access technology type is the third radio access technology type or the fourth radio access technology type.

12. The method according to claim 11, wherein the target access network device is in a registration area corresponding to the target radio access technology type.

13. The method according to claim 11 or 12, wherein the target radio access technology type is determined by the second terminal, and the method further comprises:
receiving a fifth message from the second terminal, wherein the fifth message comprises indication information for the target radio access technology type.

14. The method according to claim 11 or 12, wherein the target radio access technology type is determined by the access and mobility management function network element, and the method further comprises:
sending a sixth message to the second terminal, wherein the sixth message includes indication information for the target radio access technology type.

15. The method according to any one of claims 11 to 14, wherein the target radio access technology type is the fourth radio access technology type, wherein the fourth paging message further comprises indication information for the third radio access technology type.

16. The method according to any one of claims 11 to 15, wherein the connection status of the second terminal corresponding to the third radio access technology type is an idle state.

17. A paging method, wherein the method is applied to a second terminal and comprises:
receiving a fifth paging message, wherein the fifth paging message is received by a target access network device corresponding to a target radio access technology type, the fifth paging message comprises an identifier of the second terminal, the target radio access technology type is determined by the second terminal or by an access and mobility management function network element, the second terminal registers with the access and mobility management function network element through an access network device of the third radio access technology type and an access network device of the fourth radio access technology type, wherein the target radio access technology type is the third radio access technology type or the fourth radio access technology type; and in a case in which the target radio access technology type is the fourth radio access technology type, the fifth paging message further comprises indication information for the third radio access technology type;
sending a seventh message to the access and mobility management function network elementthrough the access network device corresponding to the third radio access technology type, wherein the seventh message comprises the identifier of the second session corresponding to the third radio access technology type, and the seventh message is used to request to restore the communication connection of the second session.

18. The method according to claim 17, wherein the receiving a fifth paging message comprises: receiving the fifth paging message according to the target radio access technology type.

19. The method according to claim 17 or 18, wherein the target access network device is in a registration area corresponding to the target radio access technology type.

20. The method according to any one of claims 17 to 19, wherein the target radio access technology type is the third radio access technology type, and the method further comprises:
send a fifth registration request to the access and mobility management function network element, wherein the fifth registration request is sent through the access network device of the third radio access technology type; and;
receive a fifth registration response from the access and mobility management function network element, wherein the fifth registration response comprises a third registration area associated with the third radio access technology type.

21. The method according to claim 20, wherein the method further comprises: storing an association relationship between the third radio access technology type and the third registration area.

22. The method according to any one of claims 17 to 19, wherein the target radio access technology type is the fourth radio access technology type, and the method further comprises:
send a sixth registration request to the access and mobility management function network element, wherein the sixth registration request is sent through the access network device of the fourth radio access technology type; and;
receive a sixth registration response from the access and mobility management function network element, wherein the sixth registration response comprises a fourth registration area associated with the fourth radio access technology type.

23. The method according to claim 22, wherein the method further comprises: storing an association relationship between the fourth radio access technology type and the fourth registration area.

24. The method according to any one of claims 17 to 23, wherein the target radio access technology type is determined by the second terminal, and the method further comprises:
send a fifth message to the access and mobility management function network element, wherein the fifth message comprises the indication information of the target radio access technology type.

25. The method according to any one of claims 17 to 23, wherein the target radio access technology type is determined by the access and mobility management function network element, and the method further comprises:
receive a sixth message from the access and mobility management function network element, wherein the sixth message comprises the indication information of the target radio access technology type.

26. The method according to any one of claims 17 to 25, wherein the method further comprises:
based on the third radio access technology type, determining a fourth cell, wherein the fourth cell is a cell provided by an access network device corresponding to the third radio access technology type.

27. The method according to any one of claims 17 to 26, wherein the connection status of the second terminal corresponding to the third radio access technology type is an idle state.

28. A communications apparatus, comprising a unit configured to implement the method according to any one of claims 1 to 10, or a unit configured to implement the method according to any one of claims **11** to 16, or a unit configured to implement the method according to any one of claims 17 to 27.

29. A communications apparatus, comprising a processor and a memory, wherein the processor and the memory are coupled, and the processor is configured to implement the method according to any one of claims 1 to 10, or implement the method according to any one of claims 11 to 16, or implement the method according to any one of claims 17 to 27.

30. A computer-readable storage medium, wherein that the computer-readable storage medium stores instructions, and the instructions are executed in computing, so that the computer performs the method according to any one of claims 1 to 10, or performs the method according to any one of claims 11 to 16, or performs the method according to any one of claims 17 to 27.
